(19) Europäisches Patentamt / European Patent Office / Office européen des brevets

(11) EP 2 300 519 B1

(12) **EUROPEAN PATENT SPECIFICATION**

(45) Date of publication and mention of the grant of the patent:
**19.09.2018 Bulletin 2018/38**

(21) Application number: **09774520.2**

(22) Date of filing: **02.07.2009**

(51) Int Cl.:
***C08J 7/04*** (2006.01) ***B29C 37/00*** (2006.01)
***B29C 45/14*** (2006.01) ***C09D 133/08*** (2006.01)
***C09D 175/16*** (2006.01)

(86) International application number:
**PCT/US2009/049538**

(87) International publication number:
**WO 2010/003071 (07.01.2010 Gazette 2010/01)**

(54) **COATED FILM FOR INSERT MOLD DECORATION, METHODS FOR USING THE SAME, AND ARTICLES MADE THEREBY**

BESCHICHTETER FILM FÜR HINTERPRITZUNGSVERZIERUNG, ANWENDUNGSVERFAHREN UND DARAUS HERGESTELLTER ARTIKEL

FILM REVÊTU POUR DÉCOR DE MOULE D'INSERTION, PROCÉDÉS D'UTILISATION DE CELUI-CI ET ARTICLES AINSI FAITS

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **02.07.2008 US 166784**

(43) Date of publication of application:
**30.03.2011 Bulletin 2011/13**

(73) Proprietor: **SABIC Global Technologies B.V.**
**4612 PX Bergen op Zoom (NL)**

(72) Inventors:
- **SHARYGIN, Andrei**
  **Mount Vernon**
  **IN 47620 (US)**
- **CLINNIN, David**
  **Newburgh**
  **IN 47630 (US)**
- **HONGLADAROM, Kwan**
  **Mount Vernon**
  **IN 47620 (US)**
- **CHAKRAVARTI, Jamuna**
  **Evansville**
  **IN 47712 (US)**
- **GAUTUM, Keshav**
  **Evansville**
  **IN 47712 (US)**
- **LAURIN, Michael, Matthew**
  **Pittsfield**
  **MA 01201 (US)**

(74) Representative: **Carpintero Lopez, Francisco et al**
**Herrero & Asociados, S.L.**
**Cedaceros 1**
**28014 Madrid (ES)**

(56) References cited:
**WO-A-03/093329** **WO-A-2007/077584**
**US-A1- 2004 152 799** **US-A1- 2007 138 667**

- **DATABASE WPI Week 200541 Thomson Scientific, London, GB; AN 2005-398526 XP002547377 & JP 2005 132999 A (DAINIPPON INK & CHEM INC) 26 May 2005 (2005-05-26)**
- **DATABASE CA [Online] CHEMICAL ABSTRACTS SERVICE, COLUMBUS, OHIO, US; SAITO, NOBUO ET AL: "Resin compositions, their surface protective layers of decorative sheets, and manufacture of decorative sheets" XP002547376 retrieved from STN Database accession no. 2007:1271316 & JP 2007 291380 A (DAINIPPON PRINTING CO., LTD., JAPAN) 8 November 2007 (2007-11-08)**
- **DATABASE WPI Week 200429 Thomson Scientific, London, GB; AN 2004-308046 XP002547378 & JP 2004 010698 A (GEN GIJUTSU KENKYUSHO KK) 15 January 2004 (2004-01-15)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 300 519 B1

## Description

### BACKGROUND OF THE INVENTION

This disclosure relates to a coated film comprising a UV-cured composition that can be used for in-mold decoration.

Decorating a three-dimensional article via in-mold decoration (IMD) or insert mold decoration involves inserting a decorative film into a molding tool in combination with a molten base polymer during an injection molding cycle. The decorative film is then bonded with or encapsulated by the molten base polymer, after the injection molding cycle is complete, to obtain an injection molded article or finished part having the desired decoration. The decoration for the finished part can either be exposed to the environment as "first surface decoration" and/or encapsulated between the substrate of the decorative film and the injected material as "second surface decoration." Thus, the decorative film becomes a permanent fixture of the finished part. The film can act as an aesthetic effect carrier and/or as a protective layer for the base polymer, the ink, or both. The term "decorative" or "decoration" herein refers to surface printing or marking of an aesthetic, functional and/or informational nature that is printed on the decorative film including, for example, symbols, logos, designs, colored regions, and/or alphanumeric characters.

The decorative film can be printed with ink, specifically formable and high temperature inks. The film can then be formed on a tool into a three-dimensional shape that corresponds to the three-dimensional shape desired for the injection molded article. Such processes are disclosed in U. S. Pat. No. 6,117,384 to Laurin et al., which describes a process wherein a colored decorated film is incorporated with a molten resin injected behind the film to produce a permanently bonded three-dimensional piece. U.S. Patent No. 6,458,913 to Honigfort and U.S. Patent No. 6,682,805 to Lilly also describe insert mold decorative films and articles. Lilly describes a multi-layer thermoplastic printable film comprising a thermoplastic film substrate having laminated to one surface a fluoride polymer in order to improve the birefringence and other properties of the film, including chemical resistance.

Increasingly it is desired that the exposed surface of a decorative film be resistant to scratch, abrasion, and chemical attacks. A cost-effective method to improve the surface characteristics of the film is to coat the film with a coating that provides the desired performance properties. For example, Sabic Innovative Plastic's LEXAN® HP92S polycarbonate is coated with a propriety hard coat specifically to improve surface durability against scratch and abrasion. The hard coat forms a bonded layer on the surface of the film, typically from 3 to 18 micrometers. The coating layer, however, is more brittle than desirable and, therefore, can limit the ability of the hard-coated film to be shaped or embossed.

In one approach, a coated polycarbonate film is only partially cured during the initial phase of the film production. Partially curing the film allows the hard coat to remain soft and compliant during thermoforming to shape the film. After the film had been thermoformed and put through an IMD process, the resulting article is then exposed to ultraviolet (UV) light for post-curing to achieve the desired surface hardness. This approach has a number of drawbacks. The partially cured film can only be exposed to special lighting. Normal lighting has a UV component that can cause a premature curing of the partially cured film. The soft surface of the partially cured film is prone to damage while it is being processed through the printing, thermoforming, and in-mold decoration injection steps, leading to a high level of yield loss. It is desirable to have a film with a hard coat already cured so that the coated film is robust to handling and does not need special lighting requirements.

In an alternative approach, an IMD three-dimensional article could also be subjected to post-production coating and subsequent curing. However, this added step in the manufacturing process can be expensive, time consuming and not provide a level of coating control, uniformity, and quality comparable to that of a pre-coated film. Post-production coating and subsequent curing can also need to be specific for a particular article, and some articles, due to their size or geometry, can need special handling requirements. A pre-coated film would eliminate these drawbacks or problems.

### SUMMARY OF INVENTION

A coated thermoplastic film is disclosed comprising a single or multilayer film substrate having a coating thereon obtained by applying to a coating composition comprising: a polymeric film substrate; and a coating formed from a coating composition that comprised a urethane acrylate present in the amount of 20 wt% to 90 wt% based upon a total weight of the coating composition and having a functionality of greater than or equal to 2.5 to 5.5 acrylate functional groups, a tensile strength of 1,000 to 5,000 psi as determined in accordance with ASTM D882, , and an elongation percent at break of 15 to 100% as determined in accordance with ASTM D882; and an acrylate monomer having at least one acrylate functional group present in the amount of 10 wt% to 80 wt% based upon a total weight of the coating composition; wherein the coating composition is subsequently cured.The acrylate refers to both acrylate and methacrylate groups.

An optional polymerization initiator to promote polymerization of the (meth)acrylate components can be included in the coating composition.

In one embodiment, the surface of the polycarbonate film substrate opposite the coating is subjected to printing (decorating) and then shaped, for example by cold forming or thermoforming, to form a three-dimensional decorative film. In some cases, an unshaped or flat decorative film is sufficient. A specific method of making the coated polycarbonate film is also disclosed.

Also disclosed is a molded article comprising the decorative film and an injection molded base polymeric structure to which the decorative film is bonded.

Finally, a method of molding an article is disclosed comprising placing the decorative film into a mold and injecting a resin, referred to as the base polymer composition, into the mold cavity space behind the decorative film, whereby the decorative film and the injection molded resin form a single molded part.

DETAILED DESCRIPTION OF THE INVENTION

The films and/or articles made from the films disclosed herein can offer improved properties such as flexibility, gouge resistance, superior adhesion, abrasion resistance, scratch resistance, anti-blocking properties, optical clarity, and/or chemical resistance. The films can be used in applications including, but not limited to, cover layers for secure identification cards, graphic displays, lenses, membrane switches, touch panel displays, key pads, housing for electronic devices, as well as any other applications that may require a portion or all of the above described properties. The films are useful in making coated articles such as an identification card (e.g., credit card, debit card, library card, membership card, passport, license, etc.).

International standard 7810 (ISO/IEC 7810) specifies physical parameters for identification (ID) cards while International Standard 10373-1 (ISO/IEC 10373-1) outlines the test procedures to ensure conformance to these specifications. One test evaluates the ease of separation of cards after a stack of the cards have been conditioned at specified temperature and humidity for a specified length of time with a known pressure applied down on the stack during the conditioning. Cards that stick together and do not separate easily are said to block, and could potentially pose issues during subsequent processing. Several additives including, but not limited to, polysiloxanes, silanes, colloidal silica, fluoro surfactants, and waxes, as well as combinations comprising at least one of these additives, can be used to impart anti-blocking properties by lowering the coefficient of friction of the coated film. However, as the amount of these additives is increased, there is a corresponding increase in haze of the film. Thus, the percent loading of these additives is limited by the resultant increase in haze possibly due to a lack of complete solubility in the coating system.

Without wishing to be bound by theory, incomplete solubility in the coating system can likely be explained. As the cured coating is heated, the modulus of the coating decreases. In addition, at temperatures closer to the glass transition temperature (Tg), more molecular mobility in the chain backbone corresponding to the alpha ($\alpha$) relaxation mode is present, and more humid environments could potentially push the Tg lower. Furthermore, during the glass to rubber transition, there could be more intimate contact between coated and uncoated surfaces within the test stack due to greater mobility and conformance. This could cause blocking. Raising the cross link density, and hence the Tg, e.g., through the addition of varying levels of multi-functional reactive monomers to the coating system, can provide improved product properties.

Adhesion to the substrate is an important feature for coated products to avoid failure in the field when the coated products are subjected to high temperature and humid environments. Use of non-reactive solvents, adhesion promoters, and substrate surface activation methods can be used to promote adhesion of coatings to plastic substrates. The coating system can handle coatings that are 100% solids or that are at least substantially free of non-reactive solvents.

As indicated above, a coated thermoplastic film is disclosed comprising a polymer (e.g., polycarbonate (PC)) film substrate having a coating made by applying (e.g., to one side of the film) a coating composition comprising urethane acrylate containing 2.5 to 5.5 acrylate functional groups on average. More specifically 3.0 to 4.5 acrylate functional groups, still more specifically 3.0 to 4.0 acrylate functional groups. The coating composition further comprises an acrylate monomer (e.g., meth(acrylate) monomer) containing at least one acrylate functional group, specifically 1 to 5, and more specifically 2 to 3.

The coating composition further comprises an optional polymerization initiator to promote polymerization of the acrylate components. Polymerization initiators can include photoinitiators that promote polymerization of the components upon exposure to ultraviolet radiation.

In the various embodiments, the urethane acrylate has an elongation percent at break of 15 to 100 according to ASTM D882, specifically an elongation percent at break of 15 to 100; a tensile strength of 1,000 to 5,000 psi as determined in accordance with ASTM D882; and/or a glass transition temperature of 10 to 50°C. In the various embodiments, the urethane acrylate can be an aliphatic urethane acrylate and/or the acrylate monomer can be a diacrylate compound.

In the various embodiments, the coating composition can comprise the urethane acrylate in the amount of 20 wt% to 90 wt%, specifically 35 wt% to 75 wt%, more specifically 55 wt% to 65 wt%; acrylate monomer present in the amount of 10 wt% to 80 wt%, specifically 25 wt% to 65 wt%, more specifically 35 wt% to 45 wt%; and/or the optional

polymerization initiator present in the amount of less than or equal to 10 wt%, specifically 0.1 wt% to 5 wt%, more specifically 0.5 wt% to 3 wt%; wherein the weight is based on the total weight of the coating composition. Also in the various embodiments, (i) the coating composition can further comprise an acrylate monomer having at least two acrylate functional groups; (ii) the acrylate monomer can have at least one acrylate functional group is hexanediol diacrylate; (iii) the acrylate monomer having at least two acrylate functional groups is a tri-functional acrylate, wherein the tri-functional acrylate can be pentaerythritol triacrylate; and/or (iv) the coating composition can further comprises a photoinitator in an amount of 0.1 wt% to 10 wt%, based upon a total weight of the coating composition and/or a surface modifier in an amount of 0.1 wt% to 5 wt%, based upon a total weight of the coating composition.

Optionally, the urethane acrylate can be present in an amount of 20 wt% to 70 wt%, the acrylate monomer having at least one acrylate functional group can be present is an amount of 25 wt% to 70 wt%, and the acrylate monomer having at least two acrylate functional groups can be present in an amount of 5 wt% to 10 wt%, wherein weight percents are based upon a total weight of the coating composition. Alternatively, the urethane acrylate can be present in an amount of 35 wt% to 50 wt%, the acrylate monomer having at least one acrylate functional group can be present is an amount of 35 wt% to 40 wt%, and the acrylate monomer having at least two acrylate functional groups can be present in an amount of 15 wt% to 25 wt%, wherein weight percents are based upon a total weight of the coating composition.

Also included herein are articles comprising any of thermoplastic films and/or coating compositions described herein, including molded articles. These articles can comprise the film subjected to printing to obtain a decorative film, in combination with an injection molded polymeric base structure to which the printed film is bonded, and wherein the coated polymeric film has been formed into a non-planar three-dimensional shape matching a three-dimensional shape of the injection molded polymeric base structure.

In various embodiments, a method of molding the article can comprising decorating and shaping the coated thermoplastic film disclosed herein, placing the film into a mold, and injecting a resin into the mold cavity space behind the film, wherein said film and said injection molded resin form a single molded part. The method can further comprise printing a surface of the coated thermoplastic film opposite the coating with markings to obtain a decorative film; forming and trimming the decorative film into a non-planar three-dimensional shape; fitting the decorative film into the mold having a surface that matches the non-planar three-dimensional shape of the decorative film; and injecting a substantially transparent resin comprising a polycarbonate resin into the mold cavity behind the decorative film to produce a one-piece, permanently bonded non-planar three-dimensional product.

The coated thermoplastic film described above can exhibits a Tabor Abrasion Delta Haze, as measured by ASTM D1044, of less than or equal to 5 percent; a minimum adhesion of 5B as measured by ASTM D3002; and/or a pencil hardness of at least HB, as measured by ASTM D3363. In these various embodiments, the coated thermoplastic film can be a co-extruded multilayer film comprising: a first layer comprising a blend of polycarbonate comprising repeat units of dimethyl bisphenol cyclohexane monomer and a polycarbonate comprising repeat units of bisphenol A; and a second layer comprising a polycarbonate comprising repeat units of bisphenol A without polycarbonate comprising repeat units of dimethyl bisphenol cyclohexane monomer. Optionally, the film substrate can be 25 to 1,500 micrometers thick, and the coating can be 1 to 50 micrometers thick.

Furthermore, the thermoplastic film of the various embodiments can be made by a process comprising applying the coating composition onto a moving web of the film substrate (e.g., polycarbonate film substrate), nipping the wet coating between a smooth metal casting roll and a elastomeric roll and, while the coated film is in contact with the casting roll, exposing the coating to UV energy to activate polymerization of the coating. The casting roll temperature is dependent upon the materials used for the layer and the coating. In some embodiments, the casting roll can be at a temperature of 71.1 to 93.0°C.

The surface of the film substrate opposite the coating can be subsequently printed or decorated, for example, with markings such as alphanumerics, graphics, symbols, indicia, logos, aesthetic designs, multicolored regions, and a combination comprising at least one of the foregoing. In some cases, the coated film can be used solely as a protective film optionally shaped, without printing. The coated film can also be subjected to printing with ink and shaped into a three-dimensional article (e.g., not merely be the form of a flat sheet, with a constant distance, but have varying distances) for specific applications.

If the final piece is three dimensional there are various techniques for forming three-dimensional IMD parts. As used herein, "three dimensional" is intended to refer to non-planar three dimensional shapes (e.g., are not merely a sheet or portion of a sheet). For example, for parts having a draw depth greater than or equal to 1 inch (2.54 cm), thermoforming or variations of thermoforming can be employed. Variations include, but are not limited to, vacuum thermoforming, zero gravity thermoforming, plug assist thermoforming, snap back thermoforming, pressure assist thermoforming, and/or high pressure thermoforming. For parts containing detailed alphanumeric graphics or draw depths less than 1 inch (2.54 cm), cold forming techniques can be employed. These include, but are not limited to, embossing, matched metal forming, bladder or hydro forming, pressure forming, and/or contact heat pressure forming.

If less than 20 wt% of the urethane acrylate component is used, flexibility and overall toughness can suffer. If more than 90 wt% is used, by weight of the total coating composition, the viscosity of the composition can be undesirably

high and, thus, make application of the coating composition difficult.

In one embodiment, the urethane acrylate can include a compound produced by reacting an aliphatic isocyanate with an oligomeric diol such as a polyester diol or polyether diol to produce an isocyanate capped oligomer. This oligomer is then reacted with hydroxy ethyl acrylate to produce the urethane acrylate.

The urethane acrylate oligomer specifically can be an aliphatic urethane acrylate, for example, a wholly aliphatic urethane (meth)acrylate oligomer based on an aliphatic polyol, which is reacted with an aliphatic polyisocyanate and acrylated. In one embodiment, it can be based on a polyol ether backbone. For example, the aliphatic urethane acrylate oligomer can be the reaction product of (i) an aliphatic polyol; (ii) an aliphatic polyisocyanate; and (iii) an end capping monomer capable of supplying reactive terminus. The polyol (i) can be an aliphatic polyol, which does not adversely affect the properties of the composition when cured. Examples include polyether polyols; hydrocarbon polyols; polycarbonate polyols; polyisocyanate polyols, and combinations comprising at least one of the foregoing.

A representative polyether polyol is based on a straight chain or branched alkylene oxide of one to about twelve carbon atoms. The polyether polyol can be prepared by any method known in the art. It can have, for example, a number average molecular weight ($M_n$), as determined by vapor pressure osmometry (VPO), per ASTM D-3592, sufficient to give the entire oligomer based on it a molecular weight of not more than about 6000 Daltons, specifically not more than about 5000 Daltons, and more specifically not more than about 4000 Daltons. Such polyether polyols include, but are not limited to, polytetramethylene polyol, polymethylene oxide, polyethylene oxide, polypropylene oxide, polybutylene oxide, and a combination comprising at least one of the foregoing.

Representative hydrocarbon polyols which can be used include, but are not limited to, those based on a linear or branched hydrocarbon polymer of 600 to 4,000 number average molecular weight (Mn) such as fully or partially hydrogenated 1,2-polybutadiene; 1,2-polybutadiene hydrogenated to an iodine number of 9 to 21; and fully or partially hydrogenated polyisobutylene. Unsaturated hydrocarbon polyols are less desirable because the oligomers made from them, when cured, are susceptible to oxidation.

Representative polycarbonate polyols include, but are not limited to, the reaction products of dialkyl carbonate with an alkylene diol, optionally copolymerized with alkylene ether diols.

In one embodiment, the polyisocyanate component (ii) can be essentially non-aromatic, less than five wt%, specifically less than one wt%, more specifically zero wt%, based upon a total weight of the polyisocyanate component. For example, non-aromatic polyisocyanates of 4 to 20 carbon atoms can be employed. Saturated aliphatic polyisocyanates include, but are not limited to, isophorone diisocyanate; dicyclohexylmethane-4, 4'-diisocyanate; 1,4-tetramethylene diisocyanate; 1,5-pentamethylene diisocyanate; 1,6-hexamethylene diisocyanate; 1,7-heptamethylene diisocyanate; 1,8-octamethylene diisocyanate; 1,9-nonamethylene diisocyanate; 1,10-decamethylene diisocyanate; 2,2,4-trimethyl-1,5-pentamethylene diisocyanate; 2,2'-dimethyl-1,5-pentamethylene diisocyanate; 3-methoxy-1, 6-hexamethylene diisocyanate; 3-butoxy-1,6-hexamethylene diisocyanate; omega, omega'-dipropylether diisocyanate; 1, 4-cyclohexyl diisocyanate; 1, 3-cyclohexyl diisocyanate; trimethylhexamethylene diisocyanate; and combinations comprising at least one of the foregoing.

The reaction rate between the hydroxyl-terminated polyol and a diisocyanate can be increased by use of a catalyst in the amount of 100 to 200 ppm by weight. Catalysts include, but are not limited to, dibutyl tin dilaurate, dibutyl tin oxide, dibutyl tin di-2-hexoate, stannous oleate, stannous octoate, lead octoate, ferrous acetoacetate, and amines such as triethylamine, diethylmethylamine, triethylenediamine, dimethylethylamine, morpholine, N-ethyl morpholine, piperazine, N,N-dimethyl benzylamine, N, N-dimethyl laurylamine, and combinations comprising at least one of the foregoing.

The end capping monomer (iii) can be one, which is capable of providing acrylate or methacrylate termini. Exemplary hydroxyl-terminated compounds which can be used as the end capping monomers include, but are not limited to, hydroxyalkyl acrylates or methacrylates such as hydroxyethyl acrylate, hydroxyethyl methacrylate, hydroxypropyl acrylate, hydroxypropyl methacrylate, hydroxybutyl acrylate, hydroxybutyl methacrylate, and the like. A specific exemplary end capping monomer is hydroxyethyl acrylate or hydroxyethyl methacrylate.

The functionality of the urethane acrylate is the number of acrylate or methacrylate termini in the oligomer. More specifically, urethane acrylates that are trifunctional acrylates can be used, meaning that the functionality is 3 on average to within the closest integer. As used herein, the term "trifunctional aliphatic urethane acrylate" or triacrylate" will refer to oligomers in which the number of acrylate groups are in the range of about 2.5 to 3.5 on average.

Some commercially available oligomers which can be used in the coating composition can include, but are not limited to, trifunctional aliphatic urethane acrylates that are part of the following families: the PHOTOMER® Series of aliphatic urethane acrylate oligomers from Cognis Corporation, Cincinnati, OH; the Sartomer CN Series of aliphatic urethane acrylate oligomer from Sartomer Company, Exton, PA; the Echo Resins Series of aliphatic urethane acrylate oligomers from Echo Resins and Laboratory, Versailles, MO; the BR Series of aliphatic urethane acrylates from Bomar Specialties, Winsted, CT; and the EBECRYL® Series of aliphatic urethane acrylate oligomers from UCB Chemicals Corporation, Smyrna, GA; In an exemplary embodiment, the aliphatic urethane acrylate is PHOTOMER 6892 oligomer.

Another component of the coating composition is one or more reactive monomer diluent having one or more

acrylate or methacrylate moieties per monomer molecule, and which is one which results in a hard curing (high modulus) coating, of suitable viscosity for application conditions. The monomer is capable of lowering the viscosity of the overall liquid composition to 10 to 10,000 centipoises (cps) at 25°C, specifically 50 to 2,000 cps, and more specifically 100 to 1,000 cps, as measured by a Brookfield Viscometer, Model LVDV-II+, spindle CPE-51, at 25°C. If a viscosity higher than 10,000 cps results, the coating composition can be used if certain processing modifications are effected, e.g., increased heating of the dies through which the coating composition is applied

The reactive acrylate monomer diluent can be mono-, di-, tri-, tetra- or penta functional. In one embodiment, di-functional monomers are employed for the desired flexibility and adhesion of the coating. The monomer can be straight- or branched-chain alkyl; cyclic; or partially aromatic. The reactive monomer diluent can also comprise a combination of monomers that, on balance, result in a suitable viscosity for coating composition, which cures to form a hard, flexible material having the desired properties.

The reactive monomer diluent, within the limits discussed above, can include monomers having a plurality of acrylate or methacrylate moieties. These can be di-, tri-, tetra- or penta-functional, specifically difunctional, in order to increase the crosslink density of the cured coating and therefore to increase modulus without causing brittleness. Examples of polyfunctional monomers include, but are not limited, to $C_6$-$C_{12}$ hydrocarbon diol diacrylates or dimethacrylates such as 1,6-hexanediol diacrylate and 1,6-hexanediol dimethacrylate; tripropylene glycol diacrylate or dimethacrylate; neopentyl glycol diacrylate or dimethacrylate; neopentyl glycol propoxylate diacrylate or dimethacrylate; neopentyl glycol ethoxylate diacrylate or dimethacrylate; 2-phenoxylethyl (meth)acrylate; alkoxylated aliphatic (meth)acrylate; polyethylene glycol (meth)acrylate; lauryl (meth)acrylate, isodecyl (meth)acrylate, isobornyl (meth)acrylate, tridecyl (meth)acrylate; pentaerythritol triacrylate; and combinations comprising at least one of the foregoing monomers. In one embodiment, the specific monomer is hexanediol diacrylate (HDDA), e.g., 1,6-hexanediol diacrylate, alone or in combination with another monomer. For example, the coating composition can comprise, in addition to the urethane acrylate, an acrylate monomer having at least one acrylate functional group, and an acrylate monomer having at least two acrylate functional groups, wherein, optionally, the acrylate monomer having at least one arcylate functional group is 1,6-hexanediol diacrylate and/or the acrylate monomer having at least two acrylate functional groups is pentaerythritol triacrylate.

Inclusion of an acrylate monomer having at least two acrylate functional groups can serve as a crosslinking agent in the coating composition, e.g., to increase crosslinking in the coating composition and/or to raise the glass transition temperature (Tg) of the coated film. By increasing crosslinking and the Tg of the coating composition, there is less likelihood for blocking in the film composition, when the film composition is used in applications such as ID cards. Blocking, e.g., the phenomenon that occurs when articles (e.g., ID cards) stick together and cannot be easily separated, can lead to issues with subsequent processing.

Another component of the coating composition can be an optional photoinitiator. The necessity for this component depends on the envisioned mode of cure of the coating composition: if it is to be ultraviolet cured, a photoinitiator is needed; if it is to be cured by an electron beam, the material can comprise substantially no photoinitiator.

In the ultraviolet cure embodiment, the photoinitiator, when used in a small but effective amount to promote radiation cure, can provide reasonable cure speed without causing premature gelation of the coating composition. Further, it can be used without interfering with the optical clarity of the cured coating material. Still further, the photoinitiator can be thermally stable, non-yellowing, and efficient.

Photoinitiators can include: hydroxycyclohexylphenyl ketone; hydroxymethylphenylpropanone; dimethoxyphenylacetophenone; 2-methyl-1-[4-(methylthio)phenyl]-2-morpholinopropanone-1; 1-(4-isopropylphenyl)-2-hydroxy-2-methylpropan-1-one; 1-(4-dodecylphenyl)-2-hydroxy-2-methylpropan-1-one;4-(2-hydroxyethoxy) phenyl-(2-hydroxy-2-propyl) ketone; diethoxyacetophenone; 2,2-di-sec-butoxyacetophenone; diethoxy-phenyl acetophenone; bis (2,6-dimethoxybenzoyl)-2,4-, 4-trimethylpentylphosphine oxide; 2,4,6-trimethylbenzoyldiphenylphosphine oxide; 2,4,6-trimethylbenzoylethoxyphenylphosphine oxide; and combinations comprising at least one of the foregoing.

Particularly suitable photoinitiators include phosphine oxide photoinitiators. Examples of such photoinitiators include the IRGACURE™ and DAROCUR™ series of phosphine oxide photoinitiators available from Ciba Specialty Chemicals; the LUCIRIN™ series from BASF Corp.; and the ESACURE™ series of photoinitiators from Lamberti, s.p.a. Other useful photoinitiators include ketone-based photoinitiators, such as hydroxy- and alkoxyalkyl phenyl ketones, and thioalkylphenyl morpholinoalkyl ketones. Also suitable are benzoin ether photoinitiators. Specific exemplary photoinitiators are 2-hydroxy-2-methyl or bis(2,4,6-trimethylbenzoyl)-phenylphosphine oxide, such as are supplied by Ciba-Geigy Corp., Ardsley, N.Y., as DAROCUR® 1173 and IRGACURE® 819, respectively.

The photoinitiator can be chosen such that curing energy of less than 2.0 Joules per square centimeter ($J/cm^2$), and specifically less than or equal to 1.0 $J/cm^2$, such as when the photoinitiator is used in the designated amount.

The polymerization initiator can include peroxy-based initiators that can promote polymerization under thermal activation. Examples of useful peroxy initiators include benzoyl peroxide, dicumyl peroxide, methyl ethyl ketone peroxide, lauryl peroxide, cyclohexanone peroxide, t-butyl hydroperoxide, t-butyl benzene hydroperoxide, t-butyl peroctoate, 2,5-dimethylhexane-2,5-dihydroperoxide, 2,5-dimethyl-2,5-di(t-butylperoxy)-hex-3-yne, di-t-butylperoxide, t-butylcumyl peroxide, alpha,alpha'-bis(t-butylperoxy-m-isopropyl)benzene, 2,5-dimethyl-2,5-di(t-butylperoxy)hexane, dicumylperoxide,

di(t-butylperoxy isophthalate, t-butylperoxybenzoate, 2,2-bis(t-butylperoxy)butane, 2,2-bis(t-butylperoxy)octane, 2,5-dimethyl-2,5-di(benzoylperoxy)hexane, di (trimethylsilyl)peroxide, trimethylsilylphenyltriphenylsilyl peroxide, and the like, and combinations comprising at least one of the foregoing polymerization initiators.

The coating composition can optionally further comprise a surface modifier, such as a surfactant, e.g., to lower the surface energy of the coating. The surface modifier can ease application, promote release of the film from a processing tool, promote wetting of the substrate, and/or possibly provide an improvement in scratch resistance. In one embodiment, the surface modifier can comprise a silicon surfactant, such as Silmer Di-1508 available from SILTECH Corporation. The coating composition can still further comprise a rheology modifier, such as cellulose acetate butyrate (CAB), to modify the rheological properties of the coating (e.g., increase the viscosity of the composition to facilitate adhesion to the substrate), depending on the desired application. The composition can also optionally comprise an inhibitor to improve shelf life and stability of the coating.

The composition can optionally further comprise an additive selected from flame retardants, antioxidants, thermal stabilizers, ultraviolet stabilizers, dyes, colorants, anti-static agents, and the like, and combinations comprising at least one of the foregoing additives, so long as they do not deleteriously affect the polymerization of the composition.

In some embodiments, a tri-functional polyurethane acrylate is present in an amount of 20 weight percent (wt%) to 70 wt%, specifically, 25 wt% to 60 wt%, more specifically, 30 wt% to 55 wt%, and still more specifically, 35 wt% to 50 wt%, based upon the weight of the coating composition. In one embodiment, a di-functional acrylate monomer is present in an amount of 25 wt% to 70 wt%, specifically, 30 wt% to 50 wt%, more specifically, 25 wt% to 60 wt%, and still more specifically, 35 wt% to 40 wt%, based upon the weight of the coating composition. In one embodiment, a tri-functional acrylate is present in an amount of 5 wt% to 25 wt%, specifically, 10 wt% to 25 wt%, more specifically, 10 wt% to 20 wt%, and still more specifically, 15 wt% to 20 wt%, based upon the weight of the coating composition. In one embodiment, the coating composition comprises 30 wt% to 40 wt% (e.g., 35 wt%) tri-functional polyurethane acrylate, 35 wt% to 45 wt% (e.g., 40 wt%) di-functional acrylate monomer (such as HDDA), and 15 wt% to 25 wt% (e.g., 25 wt%) tri-functional acrylate, (such as pentaerythritol triacrylate). Other additives such as photoinitiator, inhibitors, rheology modifiers, surface modifiers, UV stabilizers, non-yellowing agents, slip agents etc. can optionally be included to achieve specific properties.

The coating composition can provide a hard coat having advantageous properties, as described in more detail in the examples below. In one embodiment, the coating composition can have a Tabor Abrasion Delta Haze, as measured after 100 cycles using 500 gram load and CS-10F Taber abrasion wheel under ASTM D1044-08 of less than or equal to 7 percent, more specifically, less than or equal to 5 percent, and still more specifically, less than or equal to 3 percent. The hard coat can pass a Mandrel Bend of less than or equal to 1 inch (2.54 centimeters (cm)), specifically less than or equal to 1/2 inch (1.26 cm), more specifically less than or equal to 3/8 inch (0.95 cm), and still more specifically less than or equal to 1/8 inch (0.32 cm). The hard coat can also have a minimum adhesion of 5B as measure by ASTM D3002-07 and a minimum pencil hardness of HB as measured using a Elcometer® 3086 motorized pencil hardness tester (Elcometer, Inc.; Rochester Hills, Michigan) at 500 gram (g) load and Mitsubishi pencils (Mitsubishi Pencil Co Ltd) by ASTM D3363-05.

The theoretical glass transition temperature (Tg) of the system can be calculated using the Fox's equation:

$$\frac{1}{Tg} = \frac{w_a}{Tg_a} + \frac{w_b}{Tg_b}$$

where: Tg equals the glass transition temperature of the system
$Tg_a$- equals the glass transition temperature of homopolymer A
$Tg_b$ equals the glass transition temperature of homopolymer B
$w_a$ equals the weight fraction of homopolymer A
$w_b$ equals the weight fraction of homopolymer B.

When the theoretical Tg was above 45°C, it is contemplated that the anti-block properties will be better (i.e., less blocking) and more consistent. However, at the same time, when the theoretical Tg reaches beyond a certain point, for example above 55°C, other properties (such as adhesion to substrate) can suffer, giving lower environmental adhesion ratings and higher Taber abrasion values.

The polymeric film substrate can comprise various polymers. For example, the film substrate can comprise polycarbonates, polyesters (e.g., poly(ethylene terephthalate), acrylates (e.g., poly(methyl methacrylate)), polystyrenes (e.g., polyvinyl chloride polystyrene, polyvinylidene chlorides, polyolefins (e.g., polypropylene, polyethylene), fluoride resins, polyamides, polyphenylene oxides, and combinations comprising at least one of the foregoing. In one embodiment, the polymer film substrate can specifically comprise polycarbonate.

Modifiers can be used, for example, to gaining adhesion to various substrates. Monomers selected for their

high diffusion rates into said substrates can be one such modification route for improved adhesion. Solvent modifications of can also impart improved adhesion as solvent modifiers can promote higher diffusion by opening the surface structure of the film substrate. Secondary surface treatments of the film substrate can also be employed for improvements in adhesion by an increase in surface energy through flame, corona, plasma, and ozone treatment of the film substrate prior to application of coatings. Adhesion to the film substrate surface can also be improved via use of coupling agents or adhesion promoters such as silanes applied to the surface of the film substrate. These modifications are known to assist in wetting rates for the applied coatings and can increase the amount of diffusion prior to cure.

The coating can be applied to the substrate using a variety of methods including, but not limited to, spraying, brushing, curtain coating, dip coating, and/or roll coating (e.g., reverse roll coating), etc. The coating can thereafter be cured, or further texture can be imparted to the coating (e.g., before or during curing) to retain the texture on the solidified coating. Texture can be imparted to the film, for example, as the coated film travels through the nip between a heated casting roll (comprising a negative of the desired texture in its surface or in the surface of a sleeve disposed around the roll) and a backing roll (e.g., a resilient roll). In one embodiment, the casting roll can be metal. For example, the casting roll can be stainless steel plated with chromium for wear resistance. The casting roll can also be internally heated and maintained at a temperature of greater than or equal to 170°F (77°C). The backing roll can have a plastic, metal, rubber, or ceramic, etc. surface.

In one embodiment, the polycarbonate film substrate comprises polycarbonate made by the polymerization of dimethyl bisphenol cyclohexane (DMBPC) monomer, for example, as the predominant or sole hydroxy monomer, hereafter referred to as DMBPC polycarbonate. More specifically, the thermoplastic film can comprise a blend of a polycarbonate comprising repeat units from, and made by the polymerization of, dimethyl bisphenol cyclohexane (DMBPC) monomer and a polycarbonate comprising repeat units from, and made by the polymerization of, bisphenol A monomer, for example, as the predominant or sole hydroxy monomer, hereafter referred to as bisphenol A polycarbonate.

In an exemplary embodiment, the film substrate of the coated polycarbonate thermoplastic film is a multilayer film comprising a layer that is a blend of DMBPC polycarbonate in an amount of 0 to 50 wt% and a bisphenol A polycarbonate in the amount of 50 to 100 wt%, specifically, 1 to 50 wt% DMBPC polycarbonate and 50 to 99 wt% bisphenol A polycarbonate, and more specifically, 10 to 50 wt% DMBPC polycarbonate and 50 to 90 wt% bisphenol A polycarbonate, where weight percents are based on the total weight of the composition in the film substrate.

In one specific embodiment, the film substrate is a co-extruded multilayer film substrate comprising a first layer (which can be the cap or upper layer with respect to the molded article and the layer having the coating) comprising a blend of DMBPC polycarbonate and bisphenol A polycarbonate and a second adjacent layer comprising bisphenol A polycarbonate without DMBPC polycarbonate. The first layer is, for example, 0 to 50%, specifically 10 to 40%, of the thickness of the multilayer film substrate, and the second layer is 50% to 100%, specifically 60 to 90%, of the thickness of the multilayer film. In some embodiments, the film substrate can be 25 to 1,500 micrometers thick, specifically 100 to 800 micrometers thick, and the coating can be 1 to 50 micrometers thick, specifically 3 to 30 micrometers thick. Alternatively, the film substrate can be a monolithic or single layer of bisphenol A polycarbonate. Other types of polycarbonate compositions or polycarbonate blends can be used in a monolithic or multilayer film, which polycarbonates are described in greater detail below.

The polycarbonate film substrate can be made by a process wherein the coating composition is applied onto a moving web of the film substrate at a wet coating thickness of, for example, 3 to 30 micrometers, wherein the wet coating is nipped between a smooth metal plate used as a casting roll, for example a chrome plated steel roll, and a rubber or elastomeric roll and, while the coated polycarbonate thermoplastic film is in contact with the chrome plated steel roll, is exposed to UV energy to activate polymerization of the coating, wherein the casting roll temperature is about 160 to 200°F (71.1 to 93.3°C), more specifically, 170 to 180°F (76.7 to 82.2°C).

A molded article is herein disclosed comprising the above-described coated polycarbonate film after the film is printed (decorated) on one surface thereof with a print (decoration) and bonded to an injection molded polymeric base structure. The coated polycarbonate film can be cold formed or thermoformed into a three-dimensional shape matching the three-dimensional shape of the injection molded polymeric base structure.

The polymeric base structure is an injection molded polymer composition or "resin" that can also be made of a polycarbonate or blend of polycarbonate with one or more other polymer. However, polycarbonates are not required for the base polymer composition. Such base polymers can include, for example, a blend of bisphenol A polycarbonate and a cycloaliphatic polyester comprising cycloaliphatic diacid and cycloaliphatic diol units (polycyclohexane dimethanol cyclohexane dicarboxylate), ABS (an acrylonitrile-butadiene-styrene block copolymer), ABS polymer blends, aromatic polycarbonate/ABS polymer blends, and combinations comprising at least one of the foregoing. Specifically, the base polymeric structure can comprises a blend of an aromatic polycarbonate and other polymer(s). The other polymer(s) can be PBT (poly(butylene terephthalate)), PCCD (polycyclohexane dimethanol cyclohexane dicarboxylate), PET (poly(ethylene terephthalate)), ABS (acrylonitrile-butadiene-styrene block copolymer), PMMA (poly(methyl methacrylate)), PETG (polyethylene terephthalate glycol), and combinations of at least one of the foregoing polymers.

Various thermoplastic resins that can be used in the base polymer structure are available from the Sabic

Innovative Plastics under the trademarks: Lexan® (an aromatic polycarbonate), Cycolac® (an acrylonitrile-butadiene-styrene polymer), Cycoloy® (an aromatic polycarbonate/ABS polymer composition), Xylex® (an aromatic polycarbonate/amorphous polyester composition), Xenoy® (an aromatic polycarbonate/polybutylene terephthalate polymer composition), and Valox® (polybutylene terephthalate) resin, including homopolycarbonates, copolycarbonates, copolyester carbonates, and combinations comprising at least one of the foregoing resins.

In one embodiment, the injection molded base polymer can be a transparent polycarbonate (PC). Higher flow transparent materials (like Lexan® SP, a super high flow PC grade produced by Sabic Innovative Plastics) can provide an improvement in terms of viscosity, especially for thinner-walled IMD molds with their fast injection speeds.

A specific polycarbonate polymer for use in the base polymer structure consists of an aromatic polycarbonate of more than 99 wt% of bisphenol-A polycarbonate made from 2,2-bis(4-hydroxy phenyl) propane, (i.e., Bisphenol-A).

Also disclosed herein is a method of molding an article, comprising placing the above-described decorative film into a mold, and injecting a base polymer composition into the mold cavity space behind the decorative film, wherein the decorative film and the injection molded base polymer composition form a single molded part or article.

According to one exemplary embodiment, molded articles are prepared by: printing a decoration on a surface of a coated polycarbonate film substrate, for example by screen printing to form a decorative film; forming and optionally trimming the decorative film (including printed substrate) into a three-dimensional shape; fitting the decorative film into a mold having a surface which matches the three-dimensional shape of the decorative film; and injecting a base polymer composition, which can be substantially transparent, into the mold cavity behind the decorative film to produce a one-piece, permanently bonded three-dimensional article or product.

For instance, for some cell phones or other wireless electronic devices, a film with ink patterns can be back molded with a transparent resin to mold the complete front cover or housing. This can be done so that information can be visually accessed by the product's user through a transparent window that is integrated into the structural resin of the product's design. Data can be transferred to/from the electronic device to its server by IR through the transparent window. Holes in the decorative film can be provided to expose the transparent injected molded base resin for either data transfer or aesthetic purposes. The coated films disclosed herein can also be used for exterior automotive insert mold decoration (IMD) applications, among other uses.

The surface of the polycarbonate film substrate opposite the coating can be subsequently printed or decorated, for example, with markings selected from the group consisting of alphanumerics, graphics, symbols, indicia, logos, aesthetic designs, multicolored regions, and a combination comprising at least one of the foregoing. In some cases, the coated PC film can be used solely as a protective film optionally shaped, without printing. The coated PC film can also be subjected to printing with ink and shaped into a three-dimensional film for specific applications. Optional shaping can include, for example, non-planar shapes or a complex geometry in cross-section of the initial sheet. A planar sheet can be shaped into an irregular shape comprising a plurality of bends or inflections. A shaped sheet can comprise a plurality of protuberances or indentations that define a space or volume diverging from the original plane of coated thermoplastic film.

If the final piece is three dimensional, there are various techniques for forming three-dimensional IMD parts. For example, for parts having a draw depth greater than or equal to 1 inch (2.54 cm), thermoforming or variations of thermoforming can be employed. Variations include, but are not limited to, vacuum thermoforming, zero gravity thermoforming, plug assist thermoforming, snap back thermoforming, pressure assist thermoforming, and high pressure thermoforming. For parts containing detailed alphanumeric graphics or draw depths less than 1 inch (2.54 cm), cold forming techniques are exemplary. These include, but are not limited to, embossing, matched metal forming, bladder or hydro forming, pressure forming, or contact heat pressure forming.

For IMD processes, high temperature, formable inks can be used for graphics application. Second surface decoration can employ more robust ink systems to provide adequate ink adhesion during the molding process. Moreover, in applications such as light assemblies where light transmission is important, dye inks can be used rather than pigmented inks so as not to affect light transmission and haze readings. Possible inks include the following: Naz-dar 9600 and 8400; Coates C-37 Series and Decomold Ultrabond DMU; Marabuwerke IMD Spezialfarbe 3061, IMD 5001 with tie layer, and MPC; Nor-cote (UK) IMD and MSK Series' with tie layer; Sericol Techmark MTS with tie layer and Techmark IMD; Proell N2K, M1, M2, and Noriphan HTR; Seiko Advance KKS Super Slow Dry; Seiko Advance AKE(N) w/N3A, JT10, or JT20 binder; Teikoku IPX series w/ IMB003 binder; Jujo 3300 series; Jujo 3200 series with G2S binder.

Prototype molds can be constructed from common materials such as plaster, hard woods, fiberglass, syntactic foam and silicone. These materials are relatively easy to work with and allow minor modifications. It is common practice for designers to experiment with IMD to cast a silicone forming mold off an existing injection mold. For example, production forming tools should be constructed of durable materials such as cast or machined aluminum, steel or metal filled epoxy. Conductive molds should be internally heated to a temperature of 250°F (121°C).

The injection molded article or part can contract in size once it is removed from the mold and allowed to cool. The amount of shrinkage depends on the material selected, but it is predictable and can be accounted for when calculating the mold dimensions. The same is true for the expansion of the mold at operating temperatures. For example, LEXAN®

polycarbonate film can typically shrink approximately 0.5 to 0.9% after forming, depending on the mold. The thermal expansion properties of the mold material at an operating temperature of 250°F (121°C) can be subtracted from the film shrinkage number to obtain accurate mold dimensions. In addition, draft angles of 5 to 7 degrees can be suggested to facilitate part removal from male molds. Female molds require less draft (e.g., 1 to 2 degrees).

Considerations in gating include part design, flow, end use requirements, and location of in-mold graphics. The standard guidelines of traditional gating can apply to IMD along with several extra considerations. For example, one gate can be used whenever possible to minimize the potential for wrinkling the film. Gates can be located away from end-use impact as well as to provide flow from thick to thin sections to minimize weld lines. Gates can also be located at right angles to the runner to minimize jetting, splay and gate blush. Large parts requiring multiple gates can include gate positions close enough together to reduce pressure loss. Sequential gating can be used to prevent folding of the film at weld lines. Gate land lengths can be kept as short as possible. An impinging gate can be used to ensure that the incoming flow is directed against the cavity wall or core to prevent jetting. Venting (particularly full perimeter venting) can be accomplished by knock outs, cores, and parting lines and can be used whenever possible to avoid trapped gas that can burn and rupture the film. In addition, flow restrictions near gate areas can increase the potential for wash out due to increased shear. If bosses, core shutoffs, etc., are needed near a gate, rounded features or corners can be used to reduce shear. Finally, care can also be taken to ensure that the gating distributes the injection pressure over a large area, thus reducing the shear forces at the gate. Examples of gates that can accomplish this include fan gates and submarine gates that enter the part via a rib. It is common to add a puddle or thicker area at the gate entrance point for gates like valve gates, hot drops, cashew gates in order to create a pressure drop and reduce potential for washing the ink away at the gate.

When selecting a base polymer composition (also referred to as "resin"), it is advantageous that the resin's viscosity be sufficiently low such that the pressure necessary to inject it into the mold can be reduced. In addition, the injection can be profiled so that the viscosity of the injected material is maintained at a sufficiently low level in the gate area and can be raised after a suitable skin layer is established near the gate. At lower viscosity, the shear force of the injected material is lower and is therefore less likely to disturb the ink on the second surface of the substrate.

The decorations or graphics can be printed on the film substrate so that they extend beyond the gating area and into the runner system. In this case, if the ink is disturbed by the flow of the injected material, it can be disturbed in the runner area that can be trimmed off after the part is ejected from the mold. Runnerless systems or heated gating systems can also be employed. With a runnerless system, the drop diameter can be large enough to sufficiently distribute the pressure or flow into a part, such as a rib. With a heated gating system, the tips of the heated gates can be maintained at a temperature sufficiently below the softening temperature of the film substrate so as to prevent film substrate deformation.

Screen-printing is an example of a technique for producing graphics on coated film substrates of the present invention. Screen-printing is essentially a stencil printing process, which can now be generated by computer with the aid of various software packages. Its ability to vary and control ink thickness accurately has made it an extremely useful process for the decoration of many different types of plastic substrates.

In screen printing, a screen or stencil is prepared and bonded to a fine weave fabric, which is then tensioned in a rigid frame. Frames can be made of either wood or metal, with metal being preferred. The frame can be dimensionally stable and able to withstand handling during the printing process. Screen fabrics are generally made from metallized polyester, nylon, stainless steel, and most commonly, polyester. The fabric can be tightly woven under precise control using dimensionally exact filaments. There are a number of variables that can affect ink deposit, including thread diameter, squeegee angle and hardness, emulsion thickness, etc. Higher mesh screens are suggested for formed IMD applications.

A typical screen printing process involves the use of a flat bed where the film substrate is held by vacuum during printing. A frame holder positions the screen and holds it both vertically and horizontally during the printing process. With the screen lowered over the substrate bed and held at the off contact distance by the press, the squeegee carrier moves the blade across the screen at a preset speed, pressure, stroke and angle.

It is important to register artwork during a screen printing operation. This is normally done by locking the frame into a holder that aligns the frame using pins or holders. The pin alignment method is often used because the artwork can be aligned along with the screen frame. Alignment of the substrate with the print image can be done through the use of edge guides, mechanical stops or automatic devices. The first color can be aligned by this method and subsequent colors aligned through the use of targets or gauge marks which are printed alongside the artwork.

Once the ink is printed, it can be either dried or cured depending on the ink technology used. If the ink is solvent or water based, then a gas fired or electric dryer can be used to dry the ink. When printing on plastic films, the temperature and dwell time in the oven can be controlled to avoid distorting the film. If a solvent ink is used, an oven with good air flow can be used to dissipate the fumes. It is also possible to use an infrared dryer on some ink types, in which temperature control of the system can be applied. If the ink is UV curable, many commercial systems and units are available for curing such reactive ink types.

Printing or decorating on the coated PC film can be performed on the underside of the polycarbonate film

substrate but can also or alternatively be on the upper side of the polycarbonate film substrate, i.e. the surface which becomes the interface between the polycarbonate film substrate and hard coat. Generally, the hard coat is not printable but can be decorated by other means.

Among desirable performance properties of a transparent decorative film and articles in which it is contained is that it can (a) pass a scribe adhesion test, (b) have a maximum percent haze, (c) be formed, and/or (d) have a birefringence of less than or equal to 20 nm. A low birefringence overlay film can be used for three-dimensional thermoformed (vacuum or pressure forming) articles prepared by an IMD process for applications that require tight graphics registration. Various advantageous properties of the present coated film are described below in greater detail in the examples.

The coated polycarbonate substrate disclosed herein can be an extruded sheet or film that can be produced by a method comprising feeding a polycarbonate composition or resin into an extruder which heats the resin above its glass transition temperature (Tg), thereby producing a viscous melt of the thermoplastic material. The term "film" or "sheet" is used interchangeably herein. Such extruded films can have a final thickness of about 1 to about 30 mils (25 to 762 micrometers). In an embodiment, a viscous melt of the composition can be passed, under pressure provided by the extruder, through an opening in a die, which opening typically has the shape of an elongated rectangle or slot. The viscous melt assumes the shape of the die slot, thereby forming a continuous sheet or film of molten extrudate. The die center zone temperatures can be, for example, in the range of 550 to 650°F (288 to 343°C). The die edge zone temperatures can be higher to compensate for the film edge cooling at a faster rate than the film center. The film of molten extrudate can then be passed through finishing apparatus to form the sheet or film and used as a film substrate to be coated.

A finishing apparatus, for example, can comprise (as described, for example, in US Patent No. 6,682,805) a two-roll finishing or polishing stack comprising an opposing upper roll and lower roll spaced apart by a distance that generally corresponds to the desired thickness of the finished thermoplastic sheet or film. Such rolls are also sometimes referred to as calendaring rolls with a gap or nip there between. A typical finishing stack comprises opposing upper and lower steel roller. The upper roll can be covered with an elastomeric material, such as rubber, and the lower roll can have a chrome plated smooth surface. These rolls can be cooled internally by passing a fluid through the interior of the rolls using known apparatus and methods for cooling, by which the temperature of the surface of the rolls can be controlled by this method. The film can be passed through an additional nip in some cases. The film can also pass through a thickness scanner, through pull rolls, and wound onto a winder.

The temperature of the rolls can be controlled to a temperature that is below the Tg of the thermoplastic material that is being processed. In the gap between the rolls, the surfaces of the sheet or film can be abruptly vitrified via contact with the calendaring rolls. Therefore, upon contact with the rolls, the interior portion of the film can remain in the thermoplastic or molten state.

As used herein, with respect to embodiments of the coated extruded polycarbonate film substrate and/or the injection molded base polymer (which optionally comprises a polycarbonate resin), the term "polycarbonate" means compositions having repeating structural carbonate units of formula (1):

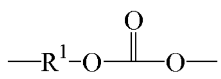

(1)

in which at least about 60 percent of the total number of $R^1$ groups contain aromatic moieties and the balance thereof are aliphatic, alicyclic, or aromatic. In an embodiment, each $R^1$ is a $C_{6-30}$ aromatic group, that is, contains at least one aromatic moiety. $R^1$ can be derived from a dihydroxy compound of the formula $HO-R^1-OH$, in particular of formula (2):

$$HO-A^1-Y^1-A^2-OH \qquad (2)$$

wherein each of $A^1$ and $A^2$ is a monocyclic divalent aromatic group and $Y^1$ is a single bond or a bridging group having one or more atoms that separate $A^1$ from $A^2$. In an exemplary embodiment, one atom separates $A^1$ from $A^2$. Specifically, each $R^1$ can be derived from a dihydroxy aromatic compound of formula (3)

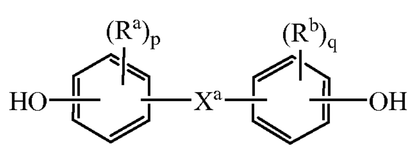

(3)

wherein $R^a$ and $R^b$ each represent a halogen or $C_{1-12}$ alkyl group and can be the same or different; and p and q are

each independently integers of 0 to 4. It will be understood that $R^a$ is hydrogen when p is 0, and likewise $R^b$ is hydrogen when q is 0. Also in formula (3), $X^a$ represents a bridging group connecting the two hydroxy-substituted aromatic groups, where the bridging group and the hydroxy substituent of each $C_6$ arylene group are disposed ortho, meta, or para (specifically para) to each other on the $C_6$ arylene group. In an embodiment, the bridging group $X^a$ is single bond, -O-, -S-, -S(O)-, $-S(O)_2-$, -C(O)-, or a $C_{1-18}$ organic group. The $C_{1-18}$ organic bridging group can be cyclic or acyclic, aromatic or non-aromatic, and can further comprise heteroatoms such as halogens, oxygen, nitrogen, sulfur, silicon, or phosphorous. The $C_{1-18}$ organic group can be disposed such that the $C_6$ arylene groups connected thereto are each connected to a common alkylidene carbon or to different carbons of the $C_{1-18}$ organic bridging group. In one embodiment, p and q is each 1, and $R^a$ and $R^b$ are each a $C_{1-3}$ alkyl group, specifically methyl, disposed meta to the hydroxy group on each arylene group.

In one embodiment, $X^a$ is a substituted or unsubstituted $C_{3-18}$ cycloalkylidene, a $C_{1-25}$ alkylidene of formula $-C(R^c)(R^d)-$ wherein $R^c$ and $R^d$ are each independently hydrogen, $C_{1-12}$ alkyl, $C_{1-12}$ cycloalkyl, $C_{7-12}$ arylalkyl, $C_{1-12}$ heteroalkyl, or cyclic $C_{7-12}$ heteroarylalkyl, or a group of the formula $-C(=R^e)-$ wherein $R^e$ is a divalent $C_{1-12}$ hydrocarbon group. Exemplary groups of this type include methylene, cyclohexylmethylene, ethylidene, neopentylidene, and isopropylidene, as well as 2-[2.2.1]-bicycloheptylidene, cyclohexylidene, cyclopentylidene, cyclododecylidene, and adamantylidene.

A specific example wherein $X^a$ is a substituted cycloalkylidene is the cyclohexylidene-bridged, alkyl-substituted bisphenol of formula (4)

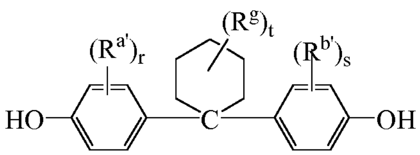

(4)

wherein $R^{a'}$ and $R^{b'}$ are each independently $C_{1-12}$ alkyl, $R^g$ is $C_{1-12}$ alkyl or halogen, r and s are each independently 1 to 4, and t is 0 to 10. In a specific embodiment, at least one of each of $R^{a'}$ and $R^{b'}$ are disposed meta to the cyclohexylidene bridging group. The substituents $R^{a'}$, $R^{b'}$, and $R^g$ can, when comprising an appropriate number of carbon atoms, be straight chain, cyclic, bicyclic, branched, saturated, or unsaturated. In an embodiment, $R^{a'}$ and $R^{b'}$ are each independently $C_{1-4}$ alkyl, $R^g$ is $C_{1-4}$ alkyl, r and s are each 1, and t is 0 to 5. In another specific embodiment, $R^{a'}$, $R^{b'}$ and $R^g$ are each methyl, r and s are each 1, and t is 0 or 3. The cyclohexylidene-bridged bisphenol can be the reaction product of two moles of o-cresol with one mole of cyclohexanone. In another exemplary embodiment, the cyclohexylidene-bridged bisphenol is the reaction product of two moles of a cresol with one mole of a hydrogenated isophorone (e.g., 1,1,3-trimethyl-3-cyclohexane-5-one). Such cyclohexane-containing bisphenols, for example the reaction product of two moles of a phenol with one mole of a hydrogenated isophorone, are useful for making polycarbonate polymers with high glass transition temperatures and high heat distortion temperatures.

In another embodiment, $X^a$ is a $C_{1-18}$ alkylene group, a $C_{3-18}$ cycloalkylene group, a fused $C_{6-18}$ cycloalkylene group, or a group of the formula $-B^1-W-B^2-$ wherein $B^1$ and $B^2$ are the same or different $C_{1-6}$ alkylene group and W is a $C_{3-12}$ cycloalkylidene group or a $C_{6-16}$ arylene group.

Specific examples of bisphenol compounds of formula (3) include 1,1-bis(4-hydroxyphenyl) methane, 1,1-bis(4-hydroxyphenyl) ethane, 2,2-bis(4-hydroxyphenyl) propane (hereinafter "bisphenol A" or "BPA"), 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxy-t-butylphenyl) propane, 3,3-bis(4-hydroxyphenyl) phthalimidine, 2-phenyl-3,3-bis(4-hydroxyphenyl) phthalimidine (PPPBP), and 1,1-bis(4-hydroxy-3-methylphenyl)cyclohexane (DMBPC). Combinations comprising at least one of the foregoing dihydroxy compounds can also be used. In one specific embodiment, the polycarbonate is a linear homopolymer derived from bisphenol A, in which each of $A^1$ and $A^2$ is p-phenylene and $Y^1$ is isopropylidene in formula (3).

The polycarbonates can have an intrinsic viscosity, as determined in chloroform at 25°C, of about 0.3 to about 1.5 deciliters per gram (dl/gm), specifically about 0.45 to about 1.0 dl/gm. The polycarbonates can have a weight average molecular weight of about 10,000 to about 200,000 Daltons, specifically about 20,000 to about 100,000 Daltons, as measured by gel permeation chromatography (GPC), using a crosslinked styrene-divinylbenzene column and calibrated to polycarbonate references. GPC samples are prepared at a concentration of about 1 mg per ml, and are eluted at a flow rate of about 1.5 ml per minute.

"Polycarbonates" as used herein further include homopolycarbonates, (wherein each $R^1$ in the polymer is the same), copolymers comprising different $R^1$ moieties in the carbonate (referred to herein as "copolycarbonates"), copolymers comprising carbonate units and other types of polymer units, such as ester units, and combinations comprising

at least one of homopolycarbonates and/or copolycarbonates.

In one embodiment, J is a $C_{2-30}$ alkylene group having a straight chain, branched chain, or cyclic (including polycyclic) structure. In another embodiment, J is derived from an aromatic dihydroxy compound of formula (3) above. In another embodiment, J is derived from an aromatic dihydroxy compound of formula (4) above. In another embodiment, J is derived from an aromatic dihydroxy compound of formula (6) above.

Polycarbonates can be manufactured by processes such as interfacial polymerization and melt polymerization. Although the reaction conditions for interfacial polymerization can vary, an exemplary process generally involves dissolving or dispersing a dihydric phenol reactant in aqueous caustic soda or potash, adding the resulting mixture to a water-immiscible solvent medium, and contacting the reactants with a carbonate precursor, such as carbonyl chloride, in the presence of a catalyst such as triethylamine and/or a phase transfer catalyst, under controlled pH conditions, e.g., about 8 to about 12. The most commonly used water immiscible solvents include methylene chloride, 1,2-dichloroethane, chlorobenzene, toluene, and the like.

Branched polycarbonate blocks can also be used, and they can be prepared by adding a branching agent during polymerization. These branching agents include polyfunctional organic compounds containing at least three functional groups selected from hydroxyl, carboxyl, carboxylic anhydride, haloformyl, and combinations of the foregoing functional groups. Specific examples include trimellitic acid, trimellitic anhydride, trimellitic trichloride, tris-p-hydroxy phenyl ethane (THPE), isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents can be added at a level of about 0.05 to about 2.0 wt%. Combinations comprising linear polycarbonates and branched polycarbonates can be used.

A chain stopper (also referred to as a capping agent) can be included during polymerization. The chain stopper limits molecular weight growth rate, and so controls molecular weight in the polycarbonate. Exemplary chain stoppers include certain mono-phenolic compounds, mono-carboxylic acid chlorides, and/or mono-chloroformates.

The injection molded base polymers can further include impact modifier(s) that do not adversely affect the desired composition properties, including light transmission. Impact modifiers can include, for example, high molecular weight elastomeric materials derived from olefins, monovinyl aromatic monomers, acrylic and methacrylic acids and their ester derivatives, as well as conjugated dienes. The polymers formed from conjugated dienes can be fully or partially hydrogenated. The elastomeric materials can be in the form of homopolymers or copolymers, including random, block, radial block, graft, and core-shell copolymers. Combinations of impact modifiers can be used.

Impact modifiers, when used, can be present in amounts of 1 to 30 wt.%, based on the total weight of the polymers in the composition.

The thermoplastic composition for the polymeric film substrate or injection molded base polymer can include various additives (e.g., filler(s) and/or reinforcing agent(s)) ordinarily incorporated in resin compositions of this type, with the proviso that the additives are selected so as to not significantly adversely affect the desired properties of the extrudable composition, for example, light transmission of greater than 50%. Combinations of additives can be used. Such additives can be mixed at a suitable time during the mixing of the components for forming the composition.

Other optional additives for thermoplastic compositions, either extruded films or injection molded resins, include antioxidants, flow aids, mold release compounds, UV absorbers, stabilizers such as light stabilizers and others, flame retardants, lubricants, plasticizers, colorants, including pigments and dyes, anti-static agents, metal deactivators, and combinations comprising one or more of the foregoing additives. Such additives are selected so as to not significantly adversely affect the desired properties of the composition.

The coated polycarbonate films and decorative films disclosed herein have numerous applications, for example, cell phone covers (top, bottom, flip); cell phone lenses; cell phone key pads; lap and computer covers; key boards; membrane switches; adhesive labels; buttons and dials of interior automotive interfaces; heat ventilation & air conditioning panels; automotive clusters; control panels for appliances (washer, dryer, microwave, air conditioner, refrigerator, stove, dishwasher, etc.); housings, lenses, keypads, or covers for hand held devices (blood analyzers, calculators, MP3 or MP4 players, gaming devices, radios, satellite radios, GPS units, etc.); touch panel displays; screens, keypads, membrane switches, or other user interfaces for ATMs, voting machines, industrial equipment, and the like; housings, lenses, keypads, membrane switches, or covers for other consumer and industrial electronic devices (TVs, monitors, cameras, video camcorders, microphones, radios, receivers, DVD players, VCRs, routers, cable boxes, gaming devices, slot machines, pachinko machines, cash registers, hand held or stationary scanners, fax machines, copiers, printers, etc); covers and buttons of memory storage devices and flash drives; covers and buttons for the mouse, blue tooth transmitters, hands free devices, headsets, earphones, speakers, etc; labels, housings, lenses, touch interfaces for musical instruments such as electronic key boards or periphery equipment such as amplifiers, mixers, and sound boards; and displays, covers, or lenses of gauges, watches, and clocks.

EXAMPLES

Coating Composition

Oligomer selection was made to provide a range of flexibility, adhesion the substrate, scratch and abrasion resistance. Difunctional monomer 1,6-hexanediol diacrylate (HDDA) diluent was used to reduce coating viscosity and to enhance adhesion properties. The coatings were formulated as 100% solids (no water or solvent present) and applied with heating (to reduce viscosity further on application to 50 to 200 cps). Temperatures of 120 to 150°F (48.9 to 65.6°C) were found to produce acceptable viscosities for application. Functionality levels of the various monomers were varied from low to high to determine the affect on Taber haze and flexibility of the cured film product. The monomer and oligomers ("Olig") used in the following examples of coating compositions are listed in Table 1 along with corresponding values of functionality, tensile strength, elongation, temperature of glass transition (Tg) and supplier. The tensile strength at break and elongation was based on ASTM D882, the standard test method for tensile properties of thin plastic films.

Table 1: Properties of Monomer and Oligomers Utilized

| Component No. | Urethane Acrylate | Functionality | Tensile Strength, (psi) | Elongation, (%) | Tg, (°C) | Supplier name |
|---|---|---|---|---|---|---|
| Monomer | HDDA | 2 | Not applicable | Not applicable | 43 | Cytec |
| Olig 1 | EBECRYL 1290 | 6 | 6700 | 2 | 69 | Cytec |
| Olig 2 | EBECRYL 8301 | 6 | 7750 | 3 | 63 | Cytec |
| Olig 3 | PHOTOMER 6892 | 3 | 1300 | 47 | 14 | Cognis |
| Olig 4 | PHOTOMER 6010 | 2 | 2060 | 45 | -10 | Cognis |
| Olig 5 | CN9010 | 6 | 6500 | 3 | 108 | Sartomer |
| Olig 6 | CN9013 | 9 | 12630 | 2 | 143 | Sartomer |
| Olig 7 | CN9290 | 2 | 450 | 125 | -28 | Sartomer |
| Olig 8 | PHOTOMER 6184 | 3 | 5380 | 7 | 53 | Cognis |
| Olig 9 | EBECRYL 8405 | 4 | 4000 | 29 | 30 | Cytec |
| Olig 10 | EBECRYL 284 | 2 | 5900 | 58 | 50 | Cytec |

Photoinitiator is added to the coating blends in order to facilitate curing of the coating under UV exposure. The following photoinitiators were investigated and listed as follows in Table 2 below.

Table 2: Photoinitiators

| No. | Trademark | Description | Source |
|---|---|---|---|
| Photoinitiator 1 (PI1) | Darocur 1173 | 2-hydroxy-2-methyl-1-phenyl-1-propanone | Ciba-Geigy |
| Photoinitiator 2 (PI2) | Irgacure 819 | Bis(2,4,6-trimethylbenzoyl) phenylphosphine oxide | Ciba-Geigy |

Examples of coating compositions (components are given in wt%) are listed in Table 3. Coating examples that resulted in loss of adhesion (rating 0B) after 72-hour exposure to 85°C and 95% relative humidity (RH) indicated as comparative.

Table 3: Coating Compositions

| Coating No. | HDODA | Olig 1 | Olig 2 | Olig 3 | Olig 4 | Olig 5 | Olig. 6 | Olig 7 | Olig 8 | Olig 9 | Olig 10 | PI1 | PI2 |
|---|---|---|---|---|---|---|---|---|---|---|---|---|---|
| Coating 1 | 39.5 | 59.5 | | | | | | | | | | 1 | |
| Coating 2 | 39.5 | | 59.5 | | | | | | | | | 1 | |
| Coating 3 | 39.5 | | | 59.5 | | | | | | | | 1 | |
| Comparative Coating 4 | 39.5 | | | | 59.5 | | | | | | | 1 | |
| Coating 5 | 39.5 | 59.5 | | | | | | | | | | | 1 |
| Coating 6 | 39.5 | | 59.5 | | | | | | | | | | 1 |
| Coating 7 | 39.5 | | | 59.5 | | | | | | | | | 1 |
| Comparative Coating 8 | 39.5 | | | | 59.5 | | | | | | | | 1 |
| Coating 9 | 39.5 | | | | | 59.5 | | | | | | 1 | |
| Comparative Coating 10 | 39.5 | | | | | | 59.5 | | | | | 1 | |
| Comparative Coating 11 | 39.5 | | | | | | | 59.5 | | | | 1 | |
| Comparative Coating 12 | 39.5 | | | | | | | | 59.5 | | | | 1 |
| Coating 13 | 39.5 | | | | | | | | | 59.5 | | | 1 |
| Comparative Coating 14 | 39.5 | | | | | | | | | | 59.5 | | 1 |

The amount of monomer was kept constant at 39.5 wt% to ensure appropriate comparison of different aliphatic urethane acrylates. The application temperature of coatings was varied slightly to achieve similar application viscosity (about 100 cps) and coating thickness (approximately 10-15 micron) for the cured films. The application of coating was achieved using a hand feed laminator by Innovative Machine Corporation (Birmingham, AL). Bisphenol A polycarbonate film was used as a substrate for coating examples 1 to 14. The film had a thickness of 10 mil (250 micrometers). The coating was cured through the film to avoid presence of oxygen (air). Fusion F300S-12® Ultraviolet Curing System (Fusion UV Systems, Inc) using either Fusion "H" or "V" bulb was used to cure the coatings. The H-bulb was used for coatings containing Darocur 1173® (Photoinitiator 1) and the-V bulb was used for coatings containing Irgacure 819® (Photoinitiator 2). The conveyor speed (MC-12 conveyor by R&D Equipment, Norwalk, OH) was kept constant at 20 feet per minute to achieve the same UV-dose of approximately 0.7 J/cm$^2$.

The results of physical testing for each coating composition are listed in Table 4. Coating examples that resulted in loss of adhesion (rating 0B) after 72-hour exposure to 85°C and 95% relative humidity are indicated as comparative.

TABLE 4: Physical Testing Results

| Coating No. | Adhesion Test | Abrasion Test Delta Haze (%) | Mandrel Bend Test, inches (mm) | Adhesion Test after 72 hrs at 85°C & 95% RH |
|---|---|---|---|---|
| Coating 1 | 5B | 7.5 | 0.375 (9.5 mm) | 5B |
| Coating 2 | 5B | 6.8 | 0.4375 (11.2 mm) | 5B |
| Coating 3 | 5B | 2.9 | 0.125 (3.2 mm) | 5B |
| Comparative Coating 4 | 5B | 5.8 | 0.125 (3.2 mm) | 0B |
| Coating 5 | 5B | 5.2 | 0.5 (12.7mm) | 5B |
| Coating 6 | 5B | 6.4 | 1 (25.4 mm) | 5B |
| Coating 7 | 5B | 4.4 | 0.125 (3.2 mm) | 5B |
| Comparative Coating 8 | 5B | 6.1 | 0.125 (3.2 mm) | 0B |
| Coating 9 | 4B | 7.8 | 1 (25.4 mm) | 5B |
| Comparative Coating 10 | 4B | 6.7 | 1 (25.4 mm) | 0B |
| Comparative Coating 11 | 5B | 5.8 | 0.125 (3.2 mm) | 0B |
| Comparative Coating 12 | 5B | 9.4 | 0.125 (3.2 mm) | 0B |
| Coating 13 | 5B | 2.2 | 0.125 (3.2 mm) | 5B |
| Comparative Coating 14 | 5B | 5.8 | 0.125 (3.2 mm) | 0B |

Coating compositions 3 and 7 containing oligomer 3 (Photomer 6892®) and composition 13 containing oligomer 9 (Ebecryl 8405®), base on the results in Table 4 are particularly superior in terms of flexibility (passed minimum mandrel of 0.125 inch or 3.2 millimeter (mm) without cracking), Taber abrasion (delta haze was less than 5%) and no adhesion failures after environmental testing (5B adhesion after 72 hrs at 85°C & 95% RH).

Coatings 3, 7 and 13 illustrate that the functionality (3 to 4), tensile strength (1300 psi to 4000 psi), elongation (29% to 47%) and temperature of glass transition (14°C to 30°C) for the aliphatic urethane acrylate resulted in a desired performance. Examples 3, 7 and 13 showed improvements in Taber haze values compared to the higher functional oligomers. The Tabor abrasion is measured under ASTM D1044-08 method using CS10F wheel with 500 grams weight and measuring the haze in the samples before and after 100 of abrasion cycles, and listing the initial haze and the change in haze (delta haze %). The flexibility of the cured films as observed in mandrel bend testing (based on ASTM D3363-05) was also improved with reduced functionality as illustrated with the ability of the coated film to pass the 1/8 inches (3.18 mm) mandrel bend. A coating composition containing oligomer 9 showed some cracking during thermoforming or embossing, suggesting that the properties of oligomer 3 are more superior without further changes to the

specific composition or specific process of use Adhesion test follows ASTM D3002-07 standard methodology. The rating for this test for coating adhesion is visual, starting with 5B for the best adhesion down to 0B for the lowest rating for adhesion.

Film substrate preparation

The film substrate used is LEXAN® polycarbonate film from Sabic Innovative Plastics that is made via polymerization of dimethyl bisphenol cyclohexane (DMBPC) monomer. DMBPC polymer generates resins of superior hardness compared to traditional bisphenol A (BPA) polycarbonate, and DMBPC was used in the film substrate for the overall coated film with the coating formula of Coating 7 from Table 3 to generate a film with superior pencil hardness (ASTM D3363) compared to using the same coating on a bisphenol A polycarbonate film substrate. The DMBPC monomer is of the following structure:

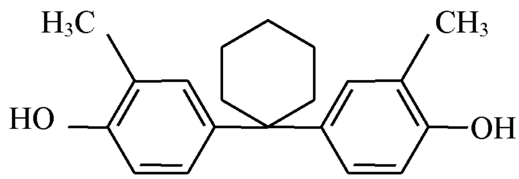

DMBPC polymer alone, however, can be brittle and not easily trimmed without cracking. To meet these challenges, DMBPC is blended with BPA polycarbonate and then co-extruded with DMBPC polycarbonate to create a DMBPC and polycarbonate layer construction. The preferred composition is 50/50 DMPC commercial grade DMX2415 and BPA polycarbonate commercial grade ML9735 from Sabic Innovative Plastics that is extruded to form film construction of 30 wt% DMBPC polycarbonate and 70 wt% BPA polycarbonate.

The DMBPC blend and polycarbonate multilayer film is made via a continuous calendaring co-extrusion process. Co-extrusion consist of a melt delivery system via a set of extruders each supplying the molten resin for individual layers. These melt streams are then fed into a feed block and then into a die which form a molten polymeric web that feed a set of calendaring rolls. A calendar typically consists of 2 to 4 counter rotating cylindrical rolls. These rolls are typically made from steel or rubber-covered steel, which are internally heated or cooled. The molten web formed by the die is successively squeezed between these rolls. The inter-roll clearances or "nips" through which the polymers are drawn through determine the thicknesses of the films.

Co-extruded film articles consisting of a cap layer containing various amounts of DMBPC and bisphenol A polycarbonate substrate were made via a continuous calendaring co-extrusion process. Commercial grade LEXAN® ML9735 polycarbonate from Sabic Innovative Plastics was used for the second layer of the film substrate. The gauge is approximately 10 mil (254 micrometers ($\mu$m)) and the percentage of the cap layer containing DMBPC is approximately 30% of the overall thickness of the film. Monolithic polycarbonate extruded film was also made via a continuous calendaring co-extrusion process using commercial grade LEXAN® ML9735 polycarbonate.

Coating process

Coating of the mentioned substrate was conducted on a production scale coating line. A thin film of coating was applied onto the moving web using a gravure coating process. A gravure roll with engraved cell volume of 19.19 BCM (Pamarco tool ref# 49-110 THC) was used to achieve target wet coating thickness of 15 to 20 micrometers. The wet coating was then nipped between a chrome plated steel roll (Ra of 0 and 1 micro-inches or Ra of 0 to 25.4 nanometers (nm)) and a rubber roll to eliminate air bubbles and impart a polished texture to the coated film. As the coated film is in contact with the chrome roll, it is exposed to UV energy of a specific spectral distribution and intensity to activate free radicals and initiate the polymerization of the coating. In this case, 2 (two) 'V' type bulbs arranged lengthwise rated at 600 watts per inch (W/in; 92.8 watts per centimeter (W/cm)) each manufactured by Fusion UV systems, was used. The cured coating was then stripped off the casting roll while maintaining good adhesion to the substrate. The radiation curable coating was 100% solids and free of any volatile species such as solvents.

Interfacial adhesion between the coating and PC film substrate relies on the ability of the coating to wet the PC surface. In addition the coating needs to solvate the interface enough to develop a strong interfacial bond. The strength of this bond is typically validated by tests such as ASTM D3359-02, which on a scale of 0B-5B, indicate the strength of the bond. A rating of 0B would indicate no adhesion and 5B would indicate strong adhesion to the interface. Table 5 below identifies process parameters that control the level of interfacial adhesion.

| TABLE 5: Process Parameters | | | | | |
|---|---|---|---|---|---|
| Run | Coating temperature (°F/°C) | Casting roll temperature (°F/°C) | Lamp power (%) | Adhesion (t = 0, RT) | Adhesion (72 hours 80°C/95% RH) |
| 1 | 137/58.3 | 150/65.6 | 50 | 5B | 0B |
| 2 | 137/58.3 | 150/65.6 | 100 | 5B | 2B |
| 3 | 137/58.3 | 175/79.4 | 50 | 5B | 5B |
| 4 | 137/58.3 | 175/79.4 | 100 | 5B | 5B |
| 5 | 160/71.1 | 160/71.1 | 75 | 5B | 4B |
| RH = relative humidity; RT = room temperature; and t = 0 is at the start (i.e., at time equal to zero). | | | | | |

Process factors studied were coating application temperature, casting roll temperature, and UV lamp power. Based on the results from these trials as summarized in Table 5 above, strong adhesion was achieved when the casting roll temperature was above 160°F (71.1°C). Accordingly, one exemplary embodiment uses a casting roll temperature of 71.1 to 93.0°C (160 to 200°F).

U.S. Patent No. 5,271,968 covers adhesion improvement of radiation curable coating with thermoplastics substrate through contact between the coating and substrate for a specified time and at a temperature of uncured coating and substrate between 90 and 150°F (between 32.2°C and 65.6°C) to drive the penetration of the coating into a region below the substrate surface and exposing it to UV energy to cross link and cure the coating. For the current coating formulation comprising a polyurethane acrylate oligomer, reactive monomer diluent, and photoinitiator, the temperature range of 160 to 175°F (71.1 to 79.4°C) achieved desired adhesion of the coating to the thermoplastic film substrate.

Results

Comparisons are made between the coated film with the Coating 7 and a commercial product offering by Sabic Innovative Plastics, namely LEXAN® HP92S coated polycarbonate. The coated film based on Coating 7 can achieve desired performance while maintaining flexibility to be thermoformed. Thus, the present coated films can provide a hard coated film that is both thermoformable and able to provide required properties of chemical resistance, scratch resistance, and abrasion resistance without post curing at the same time.

Scratch Resistance - Pencil Hardness

Pencil hardness was measured using ASTM D3363 method with a load of 500 grams (g), which showed that the present coated PC film is equivalent to HP92S coated film. Coated DMBPC/PC according to the present application is of higher hardness. The results are shown in Table 6 below.

| TABLE 6: Pencil Hardness Data | | |
|---|---|---|
| No. | Samples | Pencil Hardness @ 500g |
| Comparative Example 1 | LEXAN® HP92S coated PC film | HB-F |
| Example 1 | PC film with Coating 7 | HB |
| Example 2 | (DMBPC/PC film with Coating 7 | 1H |

Ability to be Embossed

Coated sample film samples were embossed at room temp (72°F/22°C) under two common shapes for embossed buttons in an application such as electronic keypads and appliances control buttons. The first shape is described as a square/pillow, and it is a shape of square with rounded corners that pillows up in the center. The second shape is described as a dome/rail where the embossed impression showed a rail around the keypad button impression. A total of 12 embossed impressions are made in one embossed set, the embossed impression are varied by the embossed depth ranging from 0.015 inch (0.381 mm), 0.02 inch (0.508 mm), 0.025 inch (0.762 mm), 0.03 inch (0.635 mm). For each of the embossed depths the bevel angles are varied from 20, 25, and 35 degrees. The results are shown in Table

7 below.

| TABLE 7: Embossing Ability | | |
|---|---|---|
| No. | Description | Embossing Depths: Square/Pillow and Dome/Rail |
| Comparative Example 1 | LEXAN® HP92S coated PC film | Cracked at 0.015 inches (0.381 mm) |
| Example 1 | PC film with Coating 7 | Does not crack/No Cracks observed at 0.03 inches (0.635 mm) |
| Example 2 | DMBPC/PC film with Coating 7 | No Cracks at 0.025 inches (0.635 mm)/ Cracked at 0.03 inches (0.762 mm) |

No variation in observation between different bevel angles are observed and similar performance are shown for both Square/Pillow and Dome/Rail. The coating film having Coating 7 performed better than LEXAN® HP92S PC coated film.

Ability to be Thermoformed

All film samples are thermoformed on two separate tools. The first tool is a cell phone tool that has gentle curves with maximum depth of approximately 0.5 inches. The coated surface is the outside surface in tension. The second tool is referred to as torture tool with a series of sharp corners and no radius blocks where the heated film are thermoformed on three separate blocks with depths of 0.118 inches (3.00 mm), 0.238 inches (6.04 mm) and 0.352 inches (8.94 mm). All tool temperatures are set at 250°F (123°C), and the coated sample films are heated to 325°F to 350°F (163°C 177°C) for the thermoforming process. The thermoformed parts are then examined for cracks.

For the cell phone tool, the results are reported as pass and fail, wherein cracks in the coatings is a failure. The results from the torture toll are quantified as the amount of stretch and reduction of the film thickness before a certain percentage showed cracks. The results are shown in Table 8 below. The film with Coating 7 thermoformed vastly better than the HP92S coated PC film.

| TABLE 8: Cell Phone Results | | | |
|---|---|---|---|
| No. | Description | Cell Phone Tool | Torture tool (thinning before cracked) |
| Comparative Example 1 | LEXAN® HP92S coated PC film | Cracked | Not Tested |
| Example 1 | PC film with Coating 7 | Does not crack | 15% of samples cracked after 23% of thinning |
| Example 2 | DMBPC/PC film with Coating 7 | Does not crack | 14% of samples cracked after 21% of thinning |

Abrasion Resistance

Abrasion resistance is measured with two tests, a Taber abrasion test per ASTM D1044 and a real world test where the samples are abraded with green a Scotch Brite® scour pad. Both techniques measure the sample for haze before the test and then again after the application of the abrasive. In the Taber test, a standardized abrasion wheel CS10F is weighted down by a fix weight of 500 gram and the wheel is run over the samples in circles wherein the number of cycles is fixed at 100 cycles. In the scour pad test, the sample is rubbed with the Scotch Brite® scour pad 10 times. The haze of the samples after the application of the abrasive application is recorded and the difference between that and the initial haze are reported. From the data in Table 9 below, it is shown that the present coating showed excellent abrasion resistance behavior.

| TABLE 9: Abrasion Resistance | | | |
|---|---|---|---|
| No. | Description | Tabor 500g/100cycles (Delta Haze) | Scotch Brite 10 Rubs (Delta Haze) |
| Comparative Example 1 | LEXAN® HP92S coated PC film | 6.5 (4.1 post cured *) | 21.5 |
| Example 1 | PC film with Coating 7 | 4.4 | 1.9 |
| Example 2 | DMBPC/PC film with Coating 7 | 4.3 | 1.9 |
| Example 3 | PC film with Coating 3 | 2.9 | - |
| Comparative Example 2 | Non-coated DMBPC/PC film | 18 | - |
| Comparative Example 3 | Non-coated PC film | 20 | - |
| *Post cured HP92S is as manufactured HP92S film exposed to one elliptical focused medium pressure mercury vapor lamp at 300 watt/min and conveyor speed of 20 ft/min (6.1 m/min). HP92S is designed to be post-cured to improve its Tabor and chemical resistance value; it is sold semi-cured to allow for printing on the coated surface. | | | |

Flex Fatigue Testing

For application where the coated product will be used in a continuously flexing application where the film will be continually flexed, such as keypads, the ability for resistance to breakage of the coated film after multiple actuations are needed. All samples tested passed 2 million cycles of actuations, as shown in Table 10 below.

| TABLE 10: Cycle Actuation Results | | |
|---|---|---|
| No. | Description | Flat Film/Flex Fatigue (2million Cycles) |
| Comparative Example 1 | LEXAN® HP92S coated PC film | Pass |
| Example 1 | PC film with Coating 7 | Pass |
| Example 2 | DMBPC/PC film with Coating 7 | Pass |

Printability

A film is printed with a printing ink using a mesh screen. The decorated film is then thermoformed at 350 to 400°F (177 to 204°C) using a "zero gravity" process. This process comprises a sealed thermoformer that allows the application of positive air pressure under the film during preheating and eliminates film sagging. The decorated laminate film is dried before forming to remove the water from the polycarbonate layer. The preferred dryer conditions are: 250°F (121°C) for 15 minutes (for a 10 mil or 254 μm film) and 30 minutes (for a 25 mil or 635μm film). For an in-mold-decoration process, the thermoformed, coated film is typically printed with thermally stable ink on the back of the film leaving the coated surface on the exposed side before completing the injection molding cycles. The ability for the ink to adhere to the film surfaces is measured in these tests. The samples are block screen printed at 350 mesh with inks, and the inks are then cured and checked for ink adhesion using the crosshatch test. This test follows ASTM D3002 standard methodology. The rating on this test is visual, ranging from 5B, where all of the cut squares and edges remain intact after the crosshatch cuts and application and removal of the Permacel® tape, to 0B, which is the lowest rating, where the coating had flaked along the edges of the cuts in large ribbons and some squares had detached partly or wholly. Two types of inks were tested, a screen printing ink and an inkjet ink. The ink used for screen printing is a UV cured ink, Decomold DMU® by Sun Chemicals. The ink used for digital printing on a Mimaki UJF 605C® industrial digital graphic printer is Mimaki® UV inkjet ink. The results are shown in Table 11 below.

| TABLE 11: Printability Results | | | |
|---|---|---|---|
| No. | Descriptions | Screen Print (Decomold DMU®) | Digital Print (Mimaki® inkjet) |
| Comparative Example 1 | LEXAN® HP92S coated PC film | 5B | 5B |
| Example 1 | PC film with Coating 7 | 5B | 5B |
| Example 2 | DMBPC/PC film with Coating 7 | 5B | 5B |

In the test, printing was made on both the coated side and uncoated side of the sample. On the coated side of the samples, 5B for adhesion was obtained for all samples printed with DMU. On the uncoated side of the samples, 5B adhesion was obtained with all samples printed with DMU ink. On the uncoated side of the samples, 5B adhesion was obtained with all products printed with Proell Noriphan HTR® solvent ink. On the uncoated side of samples, 5B adhesion was obtained with all samples printed with Mimaki® inkjet. On the coated side of the samples, 2 to 3B adhesion was obtained for HP92S and 0B adhesion to the PC and DMBPC/PC films with Coating 7 when printed with the Mimaki® inkjet.

Chemical Resistance

Chemical resistance tests were conducted by exposing the chemicals to the film for 1 hour at 72°F (22.2°C) where the chemical is kept wet on the film via an upturn watch glass inserted on top of the film to be tested. Exceptions are for Spray N' Wash (Aerosol) and Salt water exposure time, which were increased to 24 hours at 72°F (22.2°C). Coated PC referred to as coated calendared LEXAN® ML9735 polycarbonate film using the coating formula of Example 7. Coated DMBPC/PC film referred to as coated co-extruded film of 30/70 DMX2415 and ML9735 film using Coating 7. LEXAN® HP92S PC film is a current commercial coated film by Sabic Innovative Plastics using a proprietary coating formulation. The term "as manufactured" means that the film had not been exposed to any additional UV exposure apart from the coating process. The results of the testing are shown in Table 12 below. From the chemical resistance testing, the formulation of Coating 7 showed excellent chemical resistance in the as manufactured state.

| TABLE 12: Chemical Resistance | | | | | |
|---|---|---|---|---|---|
| Chemical | Ex. 1* (PC film with Coating 7) | Comp. Ex. 2 (Uncoated DMBPC/PC film) | Ex. 2 (DMBPC/PC with Coating 7) | Comp. Ex. 1 (HP92S Coated PC film) | Comp. Ex. 1A HP92S coated PC film (post cured**) |
| Acetone | M | F | M | F | P |
| MEK | M | F | M | F | P |
| Toluene | M | F | M | F | P |
| $MeCl_2$ | F | F | F | F | P |
| Ethyl Acetate | M | F | M | P | P |
| Xylene | M | F | M | F | P |
| 40% NaOH | M | P | M | F | P |
| Conc. HCl | P | P | P | F | P |
| Gasoline | P | F | P | F | P |
| Butyl Cellosolve | P | P | P | P | P |
| Spray N' Wash (Aerosol) | P | P | P | P | P |
| IPA | P | P | P | P | P |

(continued)

| TABLE 12: Chemical Resistance | | | | | |
|---|---|---|---|---|---|
| Chemical | Ex. 1* (PC film with Coating 7) | Comp. Ex. 2 (Uncoated DMBPC/PC film) | Ex. 2 (DMBPC/PC with Coating 7) | Comp. Ex. 1 (HP92S Coated PC film) | Comp. Ex. 1A HP92S coated PC film (post cured**) |
| Salt Water | P | P | P | F | P |
| *P = Pass; F = Fail; M = Slight surface demarcation.<br>** Post cured HP92S PC is as manufactured HP92S PC film exposed to one elliptical focused medium pressure mercury vapor lamp at 300 watt/min and a conveyor speed of 20 ft/min (6.10 m/min). | | | | | |

Identification Card Examples

In Table 13, various coating formulations are listed. Table 14 displays the results from the various tests performed on the coating formulations in Table 13. All formulations and testing were completed in a laboratory set up. The coating formulations were applied to a pre-heated metal plate, with the polycarbonate substrate to be laid on the plate, sandwiching the coating puddle. The set up was then nipped between rubber rolls to squeeze out the coating to the desired thickness. The substrate and coating were then cured to a film using "V" type ultraviolet fusion bulbs at 20 feet per minute, over two passes. The coated substrate was then peeled off the plate and the properties as displayed in Table 14 tested.

Tri-functional urethane acrylate oligomer (Photomer 6892 from Cognis Corporation), HDDA monomer to reduce viscosity and improve adhesion, and tri-functional acrylate (such as SR444 from Sartomer and Photomer 4335 from Cognis Corporation) to act as a crosslinking agent were used to form the main coating composition. Bis 2,4,6-trimethylbenzoyl phenylphophine oxide (Irgacure 819 from Ciba-Geigy) was also added to the composition in an amount of 1 wt% of the coating composition to act as a photoinitiator. Other additives to the coating composition included an inhibitor to improve shelf life and stability of the coating, cellulose acetate butyrate (CAB) as a rheology modifier, and a reactive silicone (Silmer Di-1508 from SILTECH) as a surface modifier to promote wetting of the substrate and release from the processing tool, as well as a possible improvement in scratch resistance.

As noted above, Taber Abrasion was measured under ASTM D1044 using a CS10F wheel with 500 grams of weight and measuring the haze differences in the samples before and after 100 abrasion cycles. The theoretical Tg of the system is calculated using Fox's Equation. The flexibility was measured using the Mandrel Bend test, which evaluates the resistance of the coating to cracking when elongated. Adhesion testing was conducted according to ASTM D3002. The rating for this test is visual, starting with 5B for the best adhesion and going to 0B for the lowest adhesion rating. Adhesion at room temperature and post environmental exposure adhesion (after aging at 85°C and 95% relative humidity for 72 hours) were also tested.

To perform the tests, the coated film was cut into 4 inch by 3 inch (10.2 cm by 7.6 cm) sheets. Each sheet was then interleaved with an actual identification test card such that the coated film touched the uncoated surface of the card laminate. Five cards were stacked in this way, with a block weighing 1.2 kilograms (kg) placed on top of the stack such that a uniform pressure was applied on the stack. The stack was placed into an oven at 40°C without humidity control for 24 hours. At the end of the 24 hour cycle, the stack was removed and conditioned at room temperature for 24 hours. The stack was then fanned out carefully and evaluated for ease of separation of the coated and uncoated surfaces in contact. This was reported as the number of cards blocking per 5 opportunities of contact (i.e., the number of cards that stick together and do not easily separate, which could pose a problem on subsequent processing).

| Table 13: Coating Formulations | | | | | |
|---|---|---|---|---|---|
| Coating Formulation # | Photomer 6892* (%) | HDDA** (%) | SR444*** (%) | Siltech Di-1508**** (%) | CAB***** (%) |
| 15 | 60 | 40 | 0 | 0.75 | 0 |
| 16 | 55 | 40 | 5 | 0.5 | 0 |
| 17 | 50 | 40 | 10 | 0.5 | 0 |
| 18 | 45 | 40 | 15 | 0.5 | 0 |
| 19 | 40 | 40 | 20 | 0.5 | 0 |
| 20 | 35 | 40 | 25 | 0.5 | 3.25 |

(continued)

| Table 13: Coating Formulations | | | | | |
|---|---|---|---|---|---|
| Coating Formulation # | Photomer 6892* (%) | HDDA** (%) | SR444*** (%) | Siltech Di-1508**** (%) | CAB***** (%) |
| 21 | 30 | 40 | 30 | 0.5 | 0 |
| 22 | 25 | 40 | 35 | 0 | 0 |

*Photomer 6892 is a trifunctional polyurethane acrylate oligomer from Cognis Corporation.
**HDDA is a di-functional acrylate monomer used a diluent to reduce viscosity and promote adhesion to substrate.
***SR444 is a tri-functional acrylate used as a cross linking agent from Sartomer.
****Siltech Di-1508 is a reactive silicone surface modifier from Siltech Corporation.
*****CAB is cellulose acetate butyrate added as a viscosifier for assistance in coating application.

| Table 14: Results from Coating Formulation Tests | | | | | |
|---|---|---|---|---|---|
| Coating Formulation # | Theoretical Tg(°C) | Mandrel Bend inches (cm) | Environmental Adhesion (0B - 5B) | Blocking | Taber Haze (%) |
| 15 | 25.6 | 0.125 (0.32) | 5B | 3/5 | 3.58 |
| 16 | 30.05 | 0.125 (0.32) | 5B | 3/5 | 3.52 |
| 17 | 34.5 | 0.125 (0.32) | 5B | 2/5 | 3.92 |
| 18 | 38.95 | 0.125 (0.32) | 4B | 0/5 | 4.37 |
| 19 | 43.4 | 0.125 (0.32) | 4B | 3/5 | 4.05 |
| 20 | 47.85 | 0.125 (0.32) | 5B | 0/5 | 4.9 |
| 21 | 52.3 | 0.25 (0.64) | 3B | 0/5 | 6.12 |
| 22 | 56.75 | 0.125 (0.32) | 0B | 1/5 | 5.77 |

As the percentage of Photomer 6892 is reduced and SR444 (pentaerythritol triacrylate) is increased, higher cross-linking, an increase in Tg, and better anti-block properties are expected (i.e., a higher adhesion rating such as 5B). This is also, however accompanied by a corresponding loss in flexibility and Taber abrasion. These results are illustrated in Table 14. When the theoretical Tg was above 45°C, the anti-block properties were better and more consistent. For example, compare Coating Formulations 20, 21, and 22 where only 0 or 1 cards blocked. However, at the same time, when the theoretical Tg was beyond 52.3°C (Coating Formulations 21 and 22), adhesion to substrate was poor, evidenced by the low environmental adhesion ratings, and the Taber abrasion values were higher. Although not intended to be bound by theory, the poor adhesion could be attributed to higher cure rates that could potentially cause the coating to vitrify or solidify at a faster rate than it can diffuse into the substrate, which is an important feature in developing strong adhesion.

Coating Formulations 15 through 20 each gave acceptable environmental adhesion values (e.g., 4B or 5B) and acceptable Taber Haze values (e.g., less than or equal to 5), but Coating Formulations 15, 16, 17, and 19 also give high blocking rates. Coating formulations 15, 16, and 19 each give 3 blocks per 5 opportunities of contacts. This indicates an easier separation between the coating and the substrate. Coating Formulation 18 gave acceptable values for environmental adhesion (4B), blocking (0/5), and Taber Haze (4.05), but Coating Formulation 20 gave better environmental adhesion (5B) compared to Coating Formulation 18, with similar blocking (0/5) and Taber Haze (4.9).

As used herein, the term "(meth)acrylate" and "acrylate" encompasses both acrylate and methacrylate groups, including in reference to both the urethane acrylate and the acrylate monomer. Ranges disclosed herein are inclusive and combinable (e.g., ranges of "up to about 25 wt%, or, more specifically, about 5 wt% to about 20 wt%", is inclusive of the endpoints and all inner values of the ranges of "about 5 wt% to about 25 wt%," etc.). "Combination" is inclusive of blends, mixtures, derivatives, alloys, reaction products, and so forth. Furthermore, the terms "first," "second," and so forth, herein do not denote any order, quantity, or importance, but rather are used to distinguish one element from another, and the terms "a" and "an" herein do not denote a limitation of quantity, but rather denote the presence of at least one of the referenced item. "Optional" or "optionally" means that the subsequently described event or circumstance can or can not occur, and that the description includes instances where the event occurs and instances where it does

not. The modifier "about" used in connection with a quantity is inclusive of the stated value and has the meaning dictated by context, (e.g., includes the degree of error associated with measurement of the particular quantity). The suffix "(s)" as used herein is intended to include both the singular and the plural of the term that it modifies, thereby including one or more of that term (e.g., the colorant(s) includes one or more colorants).

## Claims

**1.** A coated thermoplastic film comprising:

a polymeric film substrate; and
a coating formed from a coating composition that comprises
an aliphatic urethane acrylate present in the amount of 20 wt% to 90 wt% based upon a total weight of the coating composition and having a functionality of 2.5 to 5.5 acrylate functional groups, a tensile strength of 1,000 to 5,000 psi as determined in accordance with ASTM D882, and an elongation percent at break of 15 to 100% as determined in accordance with ASTM D882; and
an acrylate monomer having at least one acrylate functional group present in the amount of 10 wt% to 80 wt% based upon a total weight of the coating composition;
wherein the coating composition is subsequently cured.

**2.** The coated thermoplastic film of Claim 1, wherein the acrylate monomer is a diacrylate compound.

**3.** The coated thermoplastic film of any of Claims 1 - 2, wherein the polymer film substrate is a polycarbonate film substrate which is a co-extruded multilayer film comprising:

a first layer comprising a blend of polycarbonate comprising repeat units of dimethyl bisphenol cyclohexane monomer and a polycarbonate comprising repeat units of bisphenol A; and
a second layer comprising a polycarbonate comprising repeat units of bisphenol A without polycarbonate comprising repeat units of dimethyl bisphenol cyclohexane monomer;
wherein the film exhibits a Tabor Abrasion Delta Haze, as measured by ASTM D1044, of less than or equal to 5 percent, a minimum adhesion of 5B as measured by ASTM D3002; and a minimum pencil hardness of HB, as measured by ASTM D3363.

**4.** The coated thermoplastic film of any of Claims 1 - 3, wherein the polycarbonate film substrate is 25 to 1,500 micrometers thick, and the coating is 1 to 50 micrometers thick.

**5.** The coated thermoplastic film of any of Claims 1 -4, made by a process comprising applying the coating composition onto a moving web of the polycarbonate film substrate, nipping the wet coating between a smooth metal casting roll and a elastomeric roll and, while the coated film is in contact with the casting roll, exposing the coating to UV energy to activate polymerization of the coating, wherein the casting roll temperature is 71.1 to 93.0°C.

**6.** The coated thermoplastic film of any of Claims 1 - 5, wherein the acrylate monomer having at least one acrylate functional group is hexanediol diacrylate.

**7.** The coated thermoplastic film of any of Claims 1 - 6, wherein the coating composition further comprises an acrylate monomer having at least two acrylate functional groups and wherein the acrylate monomer having at least two acrylate functional groups is a tri-functional acrylate

**8.** The coated thermoplastic film of any of Claims 1 - 7, wherein the urethane acrylate is present in an amount of 20 wt% to 70 wt%, the acrylate monomer having at least one acrylate functional group is present is an amount of 25 wt% to 70 wt%, and the acrylate monomer having at least two acrylate functional groups is present in an amount of 5 wt% to 10 wt%, wherein weight percents are based upon a total weight of the coating composition.

**9.** The coated thermoplastic film of any of Claims 1 - 8, wherein the coating composition further comprises a photoinitator in an amount of 0.1 wt% to 10 wt%, based upon a total weight of the coating composition.

**10.** The coated thermoplastic film of any of Claims 1 - 9, wherein the urethane acrylate functionality has a functionality of 3.0 to 4.5.

**11.** A coated thermoplastic film comprising:

a polycarbonate film substrate; and
a coating formed from a coating composition that comprises
an aliphatic urethane acrylate having a functionality of 2.5 to 5.5 acrylate functional groups, a tensile strength of 1,000 to 5,000 psi as determined in accordance with ASTM D882, and an elongation percent at break of 15 to 100% according to ASTM D882;
an acrylate monomer having at least two acrylate functional groups; wherein the urethane acrylate is present in the amount of 20 to 90 % by weight of the coating composition, the acrylate monomer is present in the amount of 10 to 80 % by weight of the coating composition, and a photoinitiator is present in the amount of 0.1 to 10 % by weight of the coating composition;
wherein the coating composition has been cured at a temperature of 71.1 to 93.0°C; and
wherein the film substrate is a co-extruded multilayer film substrate comprising
a first layer, on which the coating is applied, comprising a blend of a first polycarbonate that comprises repeat units of dimethyl bisphenol cyclohexane monomer and a second polycarbonate that comprises repeat units of bisphenol A; and
a second layer, adjacent to the first layer, comprising a polycarbonate that comprises repeat units of bisphenol A, without a polycarbonate that comprises repeat units of dimethyl bisphenol cyclohexane monomer;
wherein the film exhibits a Tabor Abrasion Delta Haze, as measured by ASTM D1044, of less than or equal to 5 percent, a minimum adhesion of 5B as measured by ASTM D3002; and a pencil hardness of at least HB, as measured by ASTM D3363.

**12.** An article comprising the coated thermoplastic film of any of Claims 1 - 11.

**13.** A method of molding an article, comprising decorating and shaping the coated thermoplastic film according to any of Claims 1 - 11, and placing the film into a mold, and injecting a resin into the mold cavity space behind the film, wherein said film and said injection molded resin form a single molded part.

**14.** A method of molding according to Claim 13, comprising printing a surface of the coated thermoplastic film opposite the coating with markings to obtain a decorative film; forming and trimming the decorative film into a non-planar three-dimensional shape; fitting the decorative film into the mold having a surface that matches the non-planar three-dimensional shape of the decorative film; and injecting a substantially transparent resin comprising a polycarbonate resin into the mold cavity behind the decorative film to produce a one-piece, permanently bonded non-planar three-dimensional product.

**Patentansprüche**

**1.** Beschichtete thermoplastische Folie, umfassend:

ein polymeres Foliensubstrat; und
eine Beschichtung, die aus einer Beschichtungszusammensetzung gebildet ist, die
ein aliphatisches Urethanacrylat, das in einer Menge von 20 Gew.-% bis 90 Gew.-% bezogen auf das Gesamtgewicht der Beschichtungszusammensetzung vorliegt, und eine Funktionalität von 2,5 bis 5,5 funktionellen Acrylatgruppen, eine Zugfestigkeit von 1.000 bis 5.000 psi, bestimmt nach ASTM D882, und eine Bruchdehnung von 15 bis 100%, bestimmt nach ASTM D882,
aufweist; und
ein Acrylatmonomer, das mindestens eine funktionelle Acrylatgruppe aufweist, das in einer Menge von 10 Gew.-% bis 80 Gew.-% bezogen auf das Gesamtgewicht der Beschichtungszusammensetzung vorliegt;
umfasst,

wobei die Beschichtungszusammensetzung anschließend gehärtet wird.

**2.** Beschichtete thermoplastische Folie nach Anspruch 1, wobei das Acrylatmonomer eine Diacrylatverbindung ist.

**3.** Beschichtete thermoplastische Folie nach einem der Ansprüche 1-2, wobei es sich bei dem polymeren Foliensubstrat um ein Polycarbonat-Foliensubstrat handelt, das eine coextrudierte Mehrschichtfolie ist, welche:

eine erste Schicht, die eine Mischung aus Polycarbonat, umfassend Wiederholungseinheiten von Dimethyl-Bisphenol-Cyclohexan-Monomer, und Polycarbonat, umfassend Wiederholungseinheiten von Bisphenol A, umfasst; und
eine zweite Schicht, die ein Polycarbonat, umfassend Wiederholungseinheiten von Bisphenol A, ohne Polycarbonat, umfassend Wiederholungseinheiten von Dimethyl-Bisphenol-Cyclohexan-Monomer, umfasst;

wobei die Folie eine Tabor-Abrieb Delta Trübung, gemessen nach ASTM D1044, von weniger als oder gleich 5 Prozent, eine Mindesthaftung von 5B, gemessen nach ASTM D3002; und eine Mindestbleistifthärte von HB, gemessen nach ASTM D3363, aufweist.

**4.** Beschichtete thermoplastische Folie nach einem der Ansprüche 1-3, wobei das Polycarbonat-Foliensubstrat 25 bis 1.500 Mikrometer dick ist und die Beschichtung 1 bis 50 Mikrometer dick ist.

**5.** Beschichtete thermoplastische Folie nach einem der Ansprüche 1-4, hergestellt durch ein Verfahren umfassend das Aufbringen der Beschichtungszusammensetzung auf eine sich bewegende Bahn des Polycarbonat-Foliensubstrats, den Durchgang der nassen Beschichtung zwischen einer glatten Metallgießwalze und einer Elastomerwalze, und, während die beschichtete Folie in Kontakt mit der Gießwalze steht, das Aussetzen der Beschichtung einer UV-Energie, um die Polymerisation der Beschichtung auszulösen, wobei die Gießwalzentemperatur 71,1 bis 93,0 °C beträgt.

**6.** Beschichtete thermoplastische Folie nach einem der Ansprüche 1-5, wobei das Acrylatmonomer mit mindestens einer funktionellen Acrylatgruppe Hexandioldiacrylat ist.

**7.** Beschichtete thermoplastische Folie nach einem der Ansprüche 1-6, wobei die Beschichtungszusammensetzung ferner ein Acrylatmonomer mit mindestens zwei funktionellen Acrylatgruppen umfasst, und wobei das Acrylatmonomer mit mindestens zwei funktionellen Acrylatgruppen ein trifunktionelles Acrylat ist.

**8.** Beschichtete thermoplastische Folie nach einem der Ansprüche 1-7, wobei das Urethanacrylat in einer Menge von 20 Gew.-% bis 70 Gew.-% vorliegt, das Acrylatmonomer mit mindestens einer funktionellen Acrylatgruppe in einer Menge von 25 Gew.-% bis 70 Gew.-% vorliegt, und das Acrylatmonomer mit mindestens zwei funktionellen Acrylatgruppen in einer Menge von 5 Gew.-% bis 10 Gew.-% vorliegt, wobei die Gewichtsanteile auf ein Gesamtgewicht der Beschichtungszusammensetzung bezogen sind.

**9.** Beschichtete thermoplastische Folie nach einem der Ansprüche 1-8, wobei die Beschichtungszusammensetzung ferner einen Photoinitator in einer Menge von 0,1 Gew.-% bis 10 Gew.-%, bezogen auf das Gesamtgewicht der Beschichtungszusammensetzung, umfasst.

**10.** Beschichtete thermoplastische Folie nach einem der Ansprüche 1-9, wobei die Urethanacrylat-Funktionalität eine Funktionalität von 3,0 bis 4,5 aufweist.

**11.** Beschichtete thermoplastische Folie, umfassend:

ein polymeres Foliensubstrat; und
eine Beschichtung, die aus einer Beschichtungszusammensetzung gebildet ist, die
ein aliphatisches Urethanacrylat, das eine Funktionalität von 2,5 bis 5,5 funktionellen Acrylatgruppen, eine Zugfestigkeit von 1.000 bis 5.000 psi, bestimmt nach ASTM D882, und eine Bruchdehnung von 15 bis 100% nach ASTM D882, aufweist;
ein Acrylatmonomer, das mindestens zwei funktionelle Acrylatgruppen aufweist; umfasst
wobei das Urethanacrylat in einer Menge von 20 bis 90 Gew.-% der Beschichtungszusammensetzung vorliegt, das Acrylatmonomer in einer Menge von 10 bis 80 Gew.-% der Beschichtungszusammensetzung vorliegt, und ein Photoinitator in einer Menge von 0,1 bis 10 Gew.-% der Beschichtungszusammensetzung vorliegt;
wobei die Beschichtungszusammensetzung bei einer Temperatur von 71,1 bis 93,0 °C gehärtet wurde; und
wobei es sich bei dem Foliensubstrat um ein coextrudiertes Mehrschichtfoliensubstrat handelt, umfassend
eine erste Schicht, auf welche die Beschichtung aufgebracht wird, umfassend eine Mischung aus einem ersten Polycarbonat, das Wiederholungseinheiten von Dimethyl-Bisphenol-Cyclohexan-Monomer umfasst, und einem zweiten Polycarbonat, das Wiederholungseinheiten von Bisphenol A umfasst; und
eine zweite Schicht, der ersten Schicht benachbart, umfassend ein Polycarbonat, das Wiederholungseinheiten von Bisphenol A umfasst, ohne ein Polycarbonat, das Wiederholungseinheiten von Dimethyl-Bisphenol-Cyclohexan-Monomer umfasst;

wobei die Folie eine Tabor-Abrieb Delta Trübung, gemessen nach ASTM D1044, von weniger als oder gleich 5 Prozent, eine Mindesthaftung von 5B, gemessen nach ASTM D3002; und eine Bleistifthärte von mindestens HB, gemessen nach ASTM D3363, aufweist.

**12.** Artikel, der die beschichtete thermoplastische Folie nach einem der Ansprüche 1-11 umfasst.

**13.** Verfahren zum Formen eines Artikels, umfassend das Dekorieren und das Formgeben der beschichteten thermoplastischen Folie nach einem der Ansprüche 1-11, und das Einbringen der Folie in eine Form, und das Einspritzen eines Harzes in den Raum der Werkzeugkavität hinter der Folie, wobei die Folie und das spritzgegossene Harz ein einziges Formteil bilden.

**14.** Verfahren zum Formen nach Anspruch 13, umfassend das Bedrucken einer Oberfläche der beschichteten thermoplastischen Folie, der Beschichtung abgewandt, mit Markierungen, um eine dekorative Folie zu erhalten; das Formgeben und Zuschneiden der dekorativen Folie in eine nicht-planare dreidimensionale Form; das Einpassen der dekorativen Folie in die Form, die eine der nicht-planaren dreidimensionalen Form der dekorativen Folie entsprechende Oberfläche aufweist; und das Einspritzen eines im Wesentlichen transparenten Harzes, das ein Polycarbonatharz umfasst, in die Werkzeugkavität hinter der dekorativen Folie, um ein einstückiges, dauerhaft gebundenes, nicht-planares dreidimensionales Produkt herzustellen.

## Revendications

**1.** Film thermoplastique enrobé comprenant :

un substrat de film polymère ; et
un enrobage formé à partir d'une composition d'enrobage qui comprend
un acrylate d'uréthane aliphatique présent dans la quantité de 20 % en poids à 90 % en poids sur la base d'un poids total de la composition d'enrobage et ayant une fonctionnalité de groupes fonctionnels d'acrylate de 2,5 à 5,5, une résistance à la traction de 1 000 à 5 000 psi telle que déterminée selon ASTM D882, et un pourcentage d'allongement à la rupture de 15 % à 100 % tel que déterminé selon ASTM D882 ; et
un monomère d'acrylate ayant au moins un groupe fonctionnel acrylate présent dans la quantité de 10 % en poids à 80 % en poids sur la base d'un poids total de la composition d'enrobage ;
dans lequel la composition d'enrobage est ultérieurement durcie.

**2.** Film thermoplastique enrobé selon la revendication 1, dans lequel le monomère d'acrylate est un composé de diacrylate.

**3.** Film thermoplastique enrobé selon l'une quelconque des revendications 1-2, dans lequel le substrat de film de polymère est un substrat de film de polycarbonate qui est un film à couches multiples coextrudé comprenant :

une première couche comprenant un mélange de polycarbonate comprenant des unités répétées de monomère de diméthyle bisphénol cyclohexane et un polycarbonate comprenant des unités répétées de bisphénol A ; et
une deuxième couche comprenant un polycarbonate comprenant des unités répétées de bisphénol A sans polycarbonate comprenant des unités répétées de monomère de diméthyle bisphénol cyclohexane ;

dans lequel le film montre une turbidité Delta au test Tabor de l'abrasion, tel que mesuré par ASTM D1044, inférieur ou égal à 5 pour cent, une adhésion minimum de 5B telle que mesurée par ASTM D3002 ; et une dureté au crayon minimum de HB, telle que mesurée par ASTM D3363.

**4.** Film thermoplastique enrobé selon l'une quelconque des revendications 1-3, dans lequel le substrat de film de polycarbonate est de 25 à 1 500 micromètres d'épaisseur, et l'enrobage est de 1 à 50 micromètres d'épaisseur.

**5.** Film thermoplastique enrobé selon l'une quelconque des revendications 1-4, réalisé par un procédé comprenant l'application de la composition d'enrobage sur une bande en mouvement du substrat de film de polycarbonate, attrapant l'enrobage humide entre un rouleau de coulée de métal mou et un rouleau élastomère et, alors que le film enrobé est en contact avec le rouleau de coulée, exposant l'enrobage à une énergie UV pour activer une polymérisation de l'enrobage, dans lequel la température du rouleau de coulée est de 71,1 à 93,0 °C.

**6.** Film thermoplastique enrobé selon l'une quelconque des revendications 1-5, dans lequel le monomère d'acrylate ayant au moins un groupe fonctionnel acrylate est le diacrylate d'hexanédiol.

**7.** Film thermoplastique enrobé selon l'une quelconque des revendications 1-6, dans lequel la composition d'enrobage comprend en outre un monomère d'acrylate ayant au moins deux groupes fonctionnels acrylate et dans lequel le monomère d'acrylate ayant au moins deux groupes fonctionnels acrylate est un acrylate trifonctionnel

**8.** Film thermoplastique enrobé selon l'une quelconque des revendications 1-7, dans lequel l'acrylate d'uréthane est présent dans une quantité de 20 % en poids à 70 % en poids, le monomère d'acrylate ayant au moins un groupe fonctionnel acrylate est présent dans une quantité de 25 % en poids à 70 % en poids, et le monomère d'acrylate ayant au moins deux groupes fonctionnels acrylate est présent dans une quantité de 5 % en poids à 10 % en poids, dans lequel les pourcentages en poids sont basés sur un poids total de la composition d'enrobage.

**9.** Film thermoplastique enrobé selon l'une quelconque des revendications 1-8, dans lequel la composition d'enrobage comprend en outre un photoinitiateur dans une quantité de 0,1 % en poids à 10 % en poids, sur la base d'un poids total de la composition d'enrobage.

**10.** Film thermoplastique enrobé selon l'une quelconque des revendications 1-9, dans lequel la fonctionnalité d'acrylate d'uréthane a une fonctionnalité de 3,0 à 4,5.

**11.** Film thermoplastique enrobé comprenant :

un substrat de film de polycarbonate ; et
un enrobage formé à partir d'une composition d'enrobage qui comprend
un acrylate d'uréthane aliphatique ayant une fonctionnalité de 2,5 à 5,5 de groupes fonctionnels acrylate, une résistance à la traction de 1 000 à 5 000 psi telle que déterminée selon ASTM D882, et un pourcentage d'allongement à la rupture de 15 % à 100 % selon ASTM D882 ;
un monomère d'acrylate ayant au moins deux groupes fonctionnels d'acrylate ;
dans lequel l'acrylate d'uréthane est présent dans la quantité de 20 à 90 % en poids de la composition d'enrobage, le monomère d'acrylate est présent dans la quantité de 10 à 80 % en poids de la composition d'enrobage, et un photoinitiateur est présent dans la quantité de 0,1 à 10 % en poids de la composition d'enrobage ;
dans lequel la composition d'enrobage a été durcie à une température de 71,1 à 93,0°C ; et
dans lequel le substrat de film est un substrat de film à couches multiples coextrudé comprenant
une première couche, sur laquelle l'enrobage est appliqué, comprenant un mélange d'un premier polycarbonate qui comprend des unités répétées de monomère de diméthyle bisphénol cyclohexane et un deuxième polycarbonate qui comprend des unités répétées de bisphénol A ; et
une deuxième couche, adjacente à la première couche, comprenant un polycarbonate qui comprend des unités répétées de bisphénol A, sans un polycarbonate qui comprend des unités répétées de monomère de diméthyle bisphénol cyclohexane ;

dans lequel le film montre une turbidité Delta au test Tabor de l'abrasion, tel que mesuré par ASTM D1044, inférieur ou égal à 5 pour cent, une adhésion minimum de 5B telle que mesurée par ASTM D3002 ; et une dureté au crayon d'au moins HB, telle que mesurée par ASTM D3363.

**12.** Article comprenant le film thermoplastique enrobé selon l'une quelconque des revendications 1-11.

**13.** Procédé de moulage d'un article, comprenant l'ornement et la mise en forme du film thermoplastique enrobé selon l'une quelconque des revendications 1-11, et la mise en place du film dans un moule, et l'injection d'une résine dans l'espace de la cavité du moule derrière le film, dans lequel ledit film et ladite résine moulée par injection forment une seule partie moulée.

**14.** Procédé de moulage selon la revendication 13, comprenant la peinture d'une surface du film thermoplastique enrobé à l'opposé de l'enrobage avec des marquages pour obtenir un film décoratif ; la formation et la découpe du film décoratif dans une forme tridimensionnelle non planaire ; l'introduction du film décoratif dans le moule ayant une surface qui correspond à la forme tridimensionnelle non planaire du film décoratif ; et l'injection d'une résine sensiblement transparente comprenant une résine de polycarbonate dans la cavité du moule derrière le film décoratif

pour produire un produit non planaire tridimensionnel, d'une seule pièce et constamment lié.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6117384 A, Laurin
- US 6458913 B, Honigfort
- US 6682805 B, Lilly
- US 5271968 A